# EUROPEAN PATENT SPECIFICATION

(11) **EP 4 089 477 B1**
(45) Date of publication and mention of the grant of the patent: **30.07.2025**
(21) Application number: 21753774.5
(22) Date of filing: 13.01.2021
(51) Int. Cl.: G03B 5/00, G03B 5/02, G03B 30/00, H02K 41/035, H04N 23/57, H04N 23/55, H04N 23/68

(54) **SMA MOTOR, CAMERA MODULE, AND ELECTRONIC DEVICE**
SMA-MOTOR, KAMERAMODUL UND ELEKTRONISCHE VORRICHTUNG
MOTEUR SMA, MODULE DE CAMÉRA, ET DISPOSITIF ÉLECTRONIQUE

(30) Priority: 11.02.2020 CN 202010087300
(43) Date of publication of application: 16.11.2022
(73) Proprietor: Huawei Technologies Co., Ltd., Shenzhen, Guangdong 518129, (CN)
(72) Inventor: WANG, Gang, Shenzhen, Guangdong 518129 (CN); HU, Bin, Shenzhen, Guangdong 518129 (CN); LI, Xin, Shenzhen, Guangdong 518129 (CN); LI, Dengfeng, Shenzhen, Guangdong 518129 (CN); TANG, Wei, Shenzhen, Guangdong 518129 (CN)
(74) Representative: Grünecker Patent- und Rechtsanwälte PartG mbB
(86) International application number: PCT/CN2021/071415
(87) International publication number: WO 2021/159905

(56) References cited:
- WO-A2-2019/086855
- WO-A2-2019/086855
- WO-A2-2019/086855
- CN-A- 102 346 352
- CN-A- 109 791 282
- CN-A- 109 856 891
- CN-A- 109 856 891
- CN-A- 109 856 891
- CN-A- 109 975 972
- US-A1- 2010 293 940
- US-A1- 2010 293 940
- US-A1- 2018 321 503

## Description

### TECHNICAL FIELD

This application relates to the field of image shooting technologies, and in particular, to an SMA motor, a camera module, and an electronic device.

### BACKGROUND

As a photographing function of a smartphone camera (camera) becomes increasingly powerful, an optical image stabilizer (optical image stabilizer, OIS) gradually becomes one of main selling points and competitive edges of the smartphone camera. The optical image stabilizer is configured to detect and feed back, in real time, jitter of a mobile phone within a specific frequency and amplitude range and perform reverse compensation on the jitter during photographing. Because the compensation is usually obtained by correcting an optical path through an optical lens (lens) assembly, compared with improving a gain by using a software algorithm, the optical image stabilizer ensures good image quality with minor loss.

Currently, an optical image stabilization technology is gradually developing from an electromagnetic suspension image stabilization technology of a conventional voice coil motor (voice coil motor, VCM) to a shape-memory alloy thermoelectric image stabilization technology of a shape memory alloy (shape memory alloy, SMA) motor. The SMA motor drives a lens assembly to move through a resultant force generated when a plurality of SMA wires shrink when being electrified, to implement image stabilization. However, in a current photographing or video recording application using a camera module with an SMA motor, when an image shooting preview interface is opened, the image shooting preview interface is in a static state, and no photographing is performed, that is, when an image stabilization function is enabled but no image stabilization action is performed, low-frequency ripple jitter (jitter) occurs on the image shooting preview interface, resulting in poor image shooting experience of a user.

WO 2019/086855 A2 discloses a SMA motor with coated bearings in order to reduce friction.

### SUMMARY

This application is intended to provide an SMA motor, a camera module, and an electronic device. The SMA motor reduces a friction coefficient between a bearing and an upper component, to improve travel control precision of the SMA motor, reduce a jitter amount, and reduce low-frequency ripple jitter when an image shooting preview interface is still.

According to a first aspect, this application provides an SMA motor according to independent claim 1.

In this application, because the SMA wires shrink when being electrified and heated, a corresponding pulling force is generated on the upper component. Therefore, a position relationship among the four SMA wires is limited, so that the SMA motor can control, by controlling electrical signals in the four SMA wires, a resultant force applied by the four SMA wires to the upper component to move along the first reference plane or move along the second reference plane. In addition, combined displacement of displacement on the first reference plane and displacement on the second reference plane enables the upper component to be translated to any position relative to the lower component. When the SMA motor is applied to the camera module, the upper component of the SMA motor is configured to carry a lens assembly of the camera module. Because the upper component can be translated relative to the lower component, the SMA motor can drive the lens assembly to translate, so that the camera module implements optical image stabilization.

The lubrication coating can reduce a friction coefficient between the upper component and the bearing. Therefore, in a process in which the SMA wire of the SMA motor pulls the upper component and the lens assembly to move relative to the bearing and implements image stabilization, a friction force between the upper component and the bearing is small, and travel control precision of the SMA motor is high, so that a jitter amount of the upper component and the lens assembly is reduced, and low-frequency ripple jitter when an image shooting preview interface is still is reduced.

In an implementation, each bearing further includes a bearing body. One end of the bearing body is fastened to the lower component, and the lubrication coating is fastened to the other end of the bearing body. The lubrication coating includes a metal layer, a metal inorganic compound layer, and an inorganic layer that are sequentially stacked. The metal layer of the lubrication coating is fastened to the bearing body, the metal layer of the lubrication coating and the metal inorganic compound layer of the lubrication coating include a same element, and the metal inorganic compound layer of the lubrication coating and the inorganic layer of the lubrication coating include a same element.

In this implementation, a top layer that is of the lubrication coating and far away from the bearing body is the inorganic layer, and the inorganic layer has high hardness and is smooth. Therefore, the lubrication coating as a whole has better lubricating performance, and can effectively reduce a friction force between the bearing and the upper component, so that travel control precision of the SMA motor is better. In addition, the inorganic layer can further play an insulation role, to effectively and electrically isolate the bearing from the upper component, and reduce a hazard of a short circuit between the bearing and the upper component.

In addition, a bottom layer that is of the lubrication coating and fastened to the bearing body is the metal layer, and the metal layer has high flexibility and is not prone to crack. Therefore, the lubrication coating can be better fastened to the bearing body, and has high flexibility and high reliability. An intermediate layer located between the metal layer and the inorganic layer of the lubrication coating is the metal inorganic compound layer, the metal inorganic compound layer and the metal layer have a same element, and the metal inorganic compound layer and the inorganic layer also have a same element. Therefore, the metal inorganic compound layer can smoothly transit between the metal layer and the inorganic layer, so that bonding performance between the metal layer and the inorganic layer is improved, and the lubrication coating has high integrity and higher structural reliability.

The multi-layer structure of the lubrication coating is an integrated structure, that is, an integrated coating structure. The metal layer, the metal inorganic compound layer, and the inorganic layer transit gradually. An interface between the metal layer and the metal inorganic compound layer and an interface between the metal inorganic compound layer and the inorganic layer are both fuzzy interfaces, and are in a state in which two layers of materials are mixed with each other.

A thickness of the lubrication coating may be controlled to a micron level. For example, an overall thickness of the lubrication coating may be within a range of 5 µm to 10 µm, and a thickness of a diamond-like structure on a surface of the inorganic layer of the lubrication coating may be within a range of 1 µm to 3 µm.

In a possible implementation, the inorganic layer of the lubrication coating is a carbon layer, and a structure of a surface layer that is of the inorganic layer of the lubrication coating and faces away from the metal inorganic compound layer of the lubrication coating is a diamond-like structure. That is, a diamond-like carbon film is formed at the surface layer of the lubrication coating. The diamond-like carbon film is made of carbon elements, is similar in nature to a diamond, and has a substance in a graphite atomic composition structure. The diamond-like carbon film is an amorphous film, and has features of high hardness, high elastic modulus, a low friction factor, wear resistance, and good vacuum morphotactics, so that the lubrication coating is wear-resistant, and a friction force between the bearing and the upper component can be effectively reduced.

In a possible implementation, the metal layer of the lubrication coating is a chromium layer, and the metal inorganic compound layer of the lubrication coating is a carbon chromium compound layer. In this implementation, chromium is used as a metal material of the metal layer and the metal inorganic compound layer of the lubrication coating, so that the carbon layer whose surface layer is a diamond-like structure has a better adhesion to the carbon chromium compound layer at the bottom thereof, and reliability of an overall structure of the lubrication coating is higher.

In this application, the lubrication coating may be formed on the surface of the bearing body by using a physical vapor deposition technology and a chemical vapor deposition technology, so that the lubrication coating has thin thickness, high strength, and a small friction coefficient.

In some other possible implementations, the inorganic layer of the lubrication coating may also be a carbon layer whose surface layer has a non-diamond-like structure. In this case, the inorganic layer of the lubrication coating still has lubricity, but the lubricity is poorer than that in the foregoing solution having the surface layer with the diamond-like structure.

In some other possible implementations, the inorganic layer of the lubrication coating is a carbon layer, and a structure of a surface layer that is of the inorganic layer of the lubrication coating and faces away from the metal inorganic compound layer of the lubrication coating is a diamond-like structure. The metal layer of the lubrication coating is a titanium layer, and the metal inorganic compound layer is a carbon titanium compound layer.

In some other possible implementations, the inorganic layer of the lubrication coating is a silicon layer. The metal layer of the lubrication coating may be a titanium layer or a chromium layer, and the metal inorganic compound layer is correspondingly a silicon titanium compound layer or a silicon chromium compound layer.

In a possible implementation, the lubrication coating may also extend to a peripheral side surface of the bearing body. The bearing body includes a top surface facing the upper component, a bottom surface facing the lower component, and the peripheral side surface connected between the top surface and the bottom surface. The lubrication coating covers the entire top surface, and may also cover a part of the peripheral side surface or the entire peripheral side surface.

In a possible implementation, the upper component includes an upper component body and an upper coating. The upper coating is fastened to a side that is of the upper component body and close to the bearing. The upper coating may be the lubrication coating. The upper coating is in contact with the lubrication coating of the bearing, to further reduce a friction force between the upper component and the bearing, so that travel control precision of the SMA motor is higher, and a jitter amount of the lens assembly of the camera module is reduced.

In a possible implementation, the upper coating includes a metal layer, a metal inorganic compound layer, and an inorganic layer that are sequentially stacked. The metal layer of the upper coating is fastened to the upper component body, the metal layer of the upper coating and the metal inorganic compound layer of the upper coating include a same element, and the metal inorganic compound layer of the upper coating and the inorganic layer of the upper coating include a same element.

In this implementation, a top layer that is of the upper coating and far away from the upper component body is the inorganic layer, and the inorganic layer has high hardness and is smooth. Therefore, the upper coating as a whole has better lubricating performance, and can effectively reduce a friction force between the bearing and the upper component, so that travel control precision of the SMA motor is better. In addition, the inorganic layer can further play an insulation role, to effectively and electrically isolate the bearing from the upper component, and reduce a hazard of a short circuit between the bearing and the upper component.

In addition, a bottom layer that is of the upper coating and fastened to the upper component body is the metal layer, and the metal layer has high flexibility and is not prone to crack. Therefore, the upper coating can be better fastened to the upper component body, and has high flexibility and high reliability. An intermediate layer located between the metal layer and the inorganic layer of the upper coating is the metal inorganic compound layer, the metal inorganic compound layer and the metal layer have a same element, and the metal inorganic compound layer and the inorganic layer also have a same element. Therefore, the metal inorganic compound layer can smoothly transit between the metal layer and the inorganic layer, so that bonding performance between the metal layer and the inorganic layer is improved, and the upper coating has high integrity and higher structural reliability.

In a possible implementation, the inorganic layer of the upper coating is a carbon layer, and a structure of a surface layer that is of the inorganic layer of the upper coating and faces away from the metal inorganic compound layer of the upper coating is a diamond-like structure. That is, a diamond-like carbon film is formed at the surface layer of the upper coating. In this case, the inorganic layer of the upper coating enables good wear resistance of the upper coating, and can effectively reduce a friction force between the bearing and the upper component.

In a possible implementation, the metal layer of the upper coating is a chromium layer, and the metal inorganic compound layer of the upper coating is a carbon chromium compound layer. In this implementation, chromium is used as a metal material of the metal layer and the metal inorganic compound layer of the upper coating, so that the carbon layer whose surface layer is a diamond-like structure has a better adhesion to the carbon chromium compound layer at the bottom thereof, and reliability of an overall structure of the upper coating is higher.

In some possible implementations, the upper component body includes a bottom surface facing the lower component, and the upper coating may cover all or a partial area of the bottom surface of the upper component body. When the upper coating covers a partial area of the bottom surface of the upper component body, the partial area is mainly a contact area of the bearing.

In some other possible implementations, the upper component may not be provided with the upper coating, and the lubrication coating of the bearing is in direct contact with the upper component body. In this case, although the friction force between the bearing and the upper component is poorer than the structure in which the upper component is provided with the upper coating, the lubrication coating on the bearing can still meet a requirement of greatly reducing the friction force between the bearing and the upper component.

In a possible implementation, the lower component includes a lower component body and a lower coating. The lower coating is fastened to a side that is of the lower component body and close to the bearing, and the lower coating is an insulation coating. In this implementation, the lower coating of the lower component can insulate the bearing from the lower component, to reduce a hazard of a short circuit between the upper component and the lower component.

In a possible implementation, the lower coating includes a metal layer, a metal inorganic compound layer, and an inorganic layer that are sequentially stacked, and the metal layer of the lower coating is fastened to the lower component body.

In this implementation, a top layer that is of the lower coating and away from the lower component body is the inorganic layer, and the inorganic layer can play an insulation role. Therefore, the bearing is effectively and electrically isolated from the lower component, and a hazard of a short circuit between the bearing and the lower component is reduced. In addition, a bottom layer that is of the lower coating and fastened to the lower component body is the metal layer, and the metal layer has high flexibility and is not prone to crack. Therefore, the lower coating can be better fastened to the lower component body, and has high flexibility and high reliability.

In a possible implementation, the metal inorganic compound layer of the lower coating and the metal layer of the lower coating have a same element, and the metal inorganic compound layer of the lower coating and the inorganic layer of the lower coating have a same element. In this implementation, an intermediate layer located between the metal layer and the inorganic layer of the lower coating is the metal inorganic compound layer, the metal inorganic compound layer and the metal layer have a same element, and the metal inorganic compound layer and the inorganic layer also have a same element. Therefore, the metal inorganic compound layer can smoothly transit between the metal layer and the inorganic layer, so that bonding performance between the metal layer and the inorganic layer is improved, and the lower coating has high integrity and higher structural reliability.

In some possible implementations, the inorganic layer of the lower coating is a carbon layer, the metal layer of the lower coating is a chromium layer, and the metal inorganic compound layer of the lower coating is a carbon chromium compound layer. In some other possible implementations, the inorganic layer of the lower coating is a carbon layer, the metal layer of the lower coating is a titanium layer, and the metal inorganic compound layer of the lower coating is a carbon titanium compound layer.

In some other possible implementations, the inorganic layer of the lower coating is a silicon layer. The metal layer of the lower coating may be a titanium layer or a chromium layer, and the metal inorganic compound layer is correspondingly a silicon titanium compound layer or a silicon chromium compound layer.

In some other possible implementations, the inorganic layer of the lower coating may also be made of another inorganic material that can implement lubrication, and the metal layer of the lower coating may also be made of another material. This is not strictly limited in this application. In some other possible implementations, the lower coating may also be entirely plated by using an organic polymer material.

In some possible implementations, the lower component body includes a bottom surface facing the upper component, and the lower coating may cover all or a partial area of the top surface of the lower component body. When the lower coating covers a partial area of the top surface of the lower component body, the partial area is mainly a contact area of the bearing.

In some other possible implementations, the lower component may not be provided with the lower coating, the bearing body is in direct contact with the lower component body, and insulation between the upper component and the lower component is implemented through the lubrication coating of the bearing and/or the upper coating of the upper component. In some other possible implementations, the lower component is not provided with the lower coating, the upper component is not provided with the upper coating, the bearing body of the bearing is in contact with the lower component, the lubrication coating of the bearing is in contact with the upper component, and insulation between the upper component and the lower component is implemented through the lubrication coating.

In a possible implementation, the lubrication coating is lubricating oil, lubricating grease, or a solid lubricant. In this implementation, the lubrication coating can reduce a friction force between the upper component and the bearing, improve travel control precision of the SMA motor, and reduce a jitter amount of the lens assembly of the camera module.

In a possible implementation, the upper component includes an upper component body and an upper coating. The upper coating is fastened to a side that is of the upper component body and close to the bearing, and the upper coating is an insulation coating. In this implementation, lubrication is implemented between the bearing and the upper component by using the lubrication coating, and insulation is implemented between the bearing and the upper component by using the upper coating.

In a possible implementation, the lower component includes a lower component body and a lower coating. The lower coating is fastened to a side that is of the lower component body and close to the bearing, and the lower coating is an insulation coating. In this implementation, lubrication is implemented between the bearing and the upper component by using the lubrication coating, and insulation is implemented between the bearing and the lower component by using the lower coating.

In a possible implementation, the upper component includes an upper component body and an upper coating. The upper coating is fastened to a side that is of the upper component body and close to the bearing, and the upper coating is an insulation coating. The lower component includes a lower component body and a lower coating. The lower coating is fastened to a side that is of the lower component body and close to the bearing, and the lower coating is an insulation coating. In this implementation, lubrication is implemented between the bearing and the upper component by using the lubrication coating, and insulation is implemented between the upper component and the lower component by using the upper coating and the lower coating.

In a possible implementation, the insulation coating includes a metal layer, a metal inorganic compound layer, and an inorganic layer that are sequentially stacked. The inorganic layer of the insulation coating is a carbon layer. The metal layer of the insulation coating is a titanium layer, and the metal inorganic compound layer of the insulation coating is a carbon titanium compound layer. Alternatively, the metal layer of the insulation coating is a chromium layer, and the metal inorganic compound layer of the insulation coating is a carbon chromium compound layer.

In this implementation, the insulation coating has a thin thickness, high flexibility, high hardness, high insulation, and high overall structural reliability.

In some other possible implementations, the inorganic layer of the insulation coating may also be a silicon layer. The metal layer of the insulation coating may be a titanium layer or a chromium layer, and the metal inorganic compound layer is correspondingly a silicon titanium compound layer or a silicon chromium compound layer. In some other possible implementations, the insulation coating may also be entirely plated by using an organic polymer material.

In a possible implementation, the SMA motor further includes a cushion rubber. The cushion rubber is located between the upper component and the lower component. One end of the cushion rubber is fixedly connected to the upper component, and the other end is fixedly connected to the upper component. The cushion rubber may be a damping adhesive, a shock absorption adhesive, or the like.

In this implementation, the SMA motor reduces a jitter amplitude of the upper component in a movement process by using the cushion rubber, to effectively reduce a jitter amount of the lens assembly of the camera module, and reduce low-frequency ripple jitter when an image shooting preview interface is still.

In some implementations, one end of the cushion rubber may be fixedly connected to a movable crimp of the upper component. Because a pulling force of the SMA wire acts on the movable crimp, when the cushion rubber is fixedly connected to the movable crimp, a resultant force is formed at the movable crimp, thereby ensuring structural reliability of the upper component under a force. In some other implementations, the cushion rubber may alternatively be fastened to another position of the upper component.

There may be a plurality of cushion rubbers, and the plurality of cushion rubbers are centrosymmetrically disposed. A symmetric center is an intersection line of a first reference plane and a second reference plane.

In a possible implementation, the SMA motor further includes two spring arms that are L-shaped, and each of the spring arms includes a fixed end and a movable end. The movable ends of the spring arms are fastened to the upper component, and the fixed ends of the spring arms are fastened to the lower component. The two spring arms are centrosymmetrically disposed, and a symmetric center of the two spring arms is the intersection line of the first reference plane and the second reference plane.

In this implementation, the spring arm of the SMA motor can balance and buffer a force exerted on the upper component in a process in which the SMA wire is electrified to drive the upper component to carry the lens assembly to move, so that the upper component moves more stably. When the SMA wire is powered off, the spring arm of the SMA motor can further drive, by using an elastic force generated through deformation of the spring arm in a process in which the SMA wire is electrified to drive the upper component to move, the upper component to carry the lens assembly to move back to an initial position. In other words, in the SMA motor, the SMA wire shrinks when being electrified, and the pulling force of the SMA wire drives the upper component to carry the lens assembly to generate a precise optical image stabilization stroke. After the SMA wire is powered off, a restoring force of the spring arm drives the upper component to carry the lens assembly to move back to a natural center.

In this implementation, because the movable end of the spring arm is fastened to the upper component, the fixed end of the spring arm is fastened to the lower component, and the upper component is located above the lower component, a height difference is formed between the movable end of the spring arm and the fixed end of the spring arm, to form a pre-pressure. The pre-pressure of the spring arm can press the upper component onto the bearing, so as to reduce a difference of the SMA motor in different postures, and improve control precision of the SMA motor.

In addition, because the bearing is provided with the lubrication coating that is in contact with the upper component, even if the spring arm forms the pre-pressure for pressing the upper component onto the bearing, a friction force between the upper component and the bearing can still be controlled to be very small, so as to ensure control precision of the SMA motor.

In a possible implementation, the SMA motor further includes four spring arms, and each of the spring arms includes a fixed end and a movable end. The movable ends of the spring arms are fastened to the upper component, and the fixed ends of the spring arms are fastened to the lower component. The four spring arms are divided into two pairs, and the two pairs of spring arms are symmetrically disposed relative to the first reference plane. Two spring arms of a same pair are symmetrically disposed relative to the second reference plane.

In this implementation, the spring arm of the SMA motor can balance and buffer a force exerted on the upper component in a process in which the SMA wire is electrified to drive the upper component to carry the lens assembly to move, so that the upper component moves more stably. In addition, when the SMA wire is powered off, the spring arm of the SMA motor can further drive, by using an elastic force generated through deformation of the spring arm in a process in which the SMA wire is electrified to drive the upper component to move, the upper component to carry the lens assembly to move back to an initial position. In addition, a disposition relationship of the four spring arms corresponds to a disposition relationship of the SMA wires. Therefore, the four spring arms may better implement a balance function and a restoration function.

In this implementation, because the movable end of the spring arm is fastened to the upper component, the fixed end of the spring arm is fastened to the lower component, and the upper component is located above the lower component, a height difference is formed between the movable end of the spring arm and the fixed end of the spring arm, to form a pre-pressure. The pre-pressure of the spring arm can press the upper component onto the bearing, so as to reduce a difference of the SMA motor in different postures, and improve control precision of the SMA motor.

In addition, because the bearing is provided with the lubrication coating that is in contact with the upper component, even if the spring arm forms the pre-pressure for pressing the upper component onto the bearing, a friction force between the upper component and the bearing can still be controlled to be very small, so as to ensure control precision of the SMA motor.

In a possible implementation, the spring arm further includes a bending part, the bending part is located between the fixed end and the movable end, and the bending part protrudes in a direction away from the lower component of the motor.

In this implementation, the bending part is configured to enable the spring arm to form the pre-pressure. The pre-pressure of the spring arm can press the upper component onto the bearing, so as to reduce a difference of the SMA motor in different postures, and improve control precision of the SMA motor. In this case, there may be a height difference between the movable end and the fixed end of the spring arm, and the pre-pressure is formed, or no pre-pressure is formed, or the pre-pressure is small. Alternatively, no height difference may be formed between the movable end and the fixed end of the spring arm.

According to a second aspect, this application further provides a camera module, including a module support, a lens assembly mounted inside the module support, an image sensor, and the SMA motor according to any one of the foregoing implementations. A lower component of the SMA motor is fixedly connected to the module support, the lens assembly is mounted on an upper component of the SMA motor, the SMA motor includes a transparent area, a lens of the lens assembly directly faces the transparent area, the image sensor is located on a side that is of the SMA motor and that faces away from the lens assembly, and the image sensor is configured to receive light passing through the lens assembly and the transparent area.

In this application, the camera module to which the SMA motor is applied can implement optical image stabilization. In addition, the SMA motor reduces a friction coefficient between a bearing and the upper component, to improve travel control precision of the SMA motor, reduce a jitter amount of the upper component and the lens assembly, and reduce low-frequency ripple jitter when an image shooting preview interface is still.

According to a third aspect, this application further provides an electronic device, including a housing, a processor, and the foregoing camera module. The processor and the camera module are accommodated in the housing, and the camera module is electrically connected to the processor. In this application, the electronic device to which the camera module is applied can reduce low-frequency ripple jitter when an image shooting preview interface is still.

### BRIEF DESCRIPTION OF DRAWINGS

FIG. 1 is a schematic diagram of a structure of an electronic device according to an embodiment of this application;
FIG. 2 is a schematic diagram of a structure of the electronic device shown in FIG. 1 from another angle;
FIG. 3 is a schematic diagram of a structure of a camera module according to an embodiment of this application;
FIG. 4 is a schematic diagram of a structure of a voice coil motor and a lens assembly of the camera module shown in FIG. 3;
FIG. 5 is a schematic diagram of a structure of an SMA motor of the camera module shown in FIG. 3;
FIG. 6 is a top view of the SMA motor shown in FIG. 5 in some embodiments;
FIG. 7 is a schematic diagram of a structure of a spring arm of the SMA motor shown in FIG. 6 in some embodiments;
FIG. 8 is a schematic diagram of a structure of a spring arm of the SMA motor shown in FIG. 6 in some other embodiments;
FIG. 9 is a top view of the SMA motor shown in FIG. 5 in some other embodiments;
FIG. 10 is a schematic diagram of a partial structure of the SMA motor shown in FIG. 5;
FIG. 11 is a schematic diagram of impact of a friction force between an upper component and a bearing of an SMA motor on a lens assembly in a movement process;
FIG. 12 is a schematic diagram of a structure of a bearing of the SMA motor shown in FIG. 10 in some embodiments;
FIG. 13 is a schematic diagram of a basic structure of a reaction device for preparing a lubrication coating;
FIG. 14 is a schematic diagram of a partial structure of an upper component of the SMA motor shown in FIG. 10 in some embodiments;
FIG. 15 is a schematic diagram of a partial structure of a lower component of the SMA motor shown in FIG. 10 in some embodiments;
FIG. 16 is a schematic diagram of a partial structure of an upper component, a bearing, and a lower component of the SMA motor shown in FIG. 10 in some other embodiments; and
FIG. 17 is a schematic diagram of a structure of the SMA motor shown in FIG. 3 in some other embodiments.

### DESCRIPTION OF EMBODIMENTS

The following describes embodiments of this application with reference to the accompanying drawings in the following embodiments of this application.

Embodiments of this application provide a shape memory alloy (shape memory alloy, SMA) motor, a camera module to which the SMA motor is applied, and an electronic device to which the camera module is applied. As an image stabilization motor, the SMA motor has advantages such as a simple structure, a small size, large load, low power consumption, no magnetic interference, and low costs. The camera module uses the SMA motor to drive a lens assembly to move, so as to implement optical image stabilization, thereby reducing image quality loss and ensuring good image quality. The electronic device may be a mobile phone, a tablet computer, a notebook computer, a camera, a wearable device, a television, or the like. The wearable device may be a smart band, a smart watch, a smart head-mounted display, smart glasses, or the like.

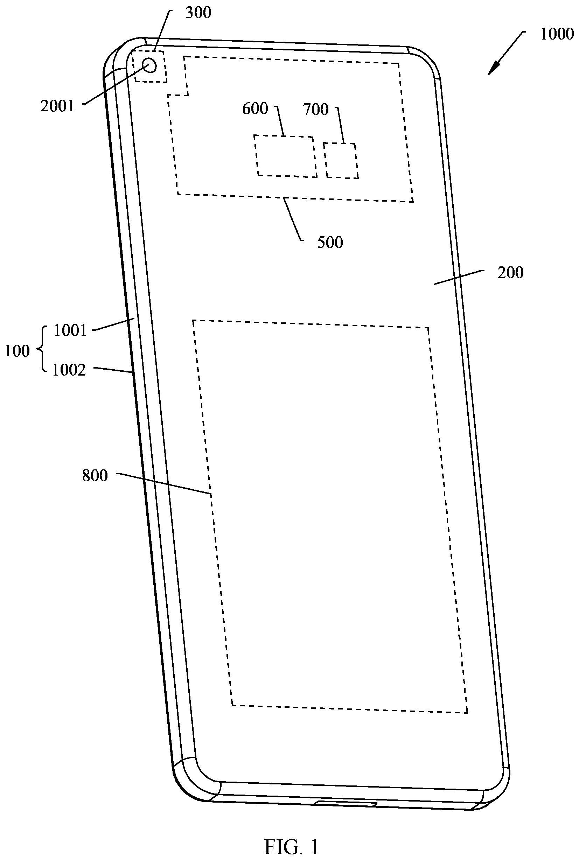

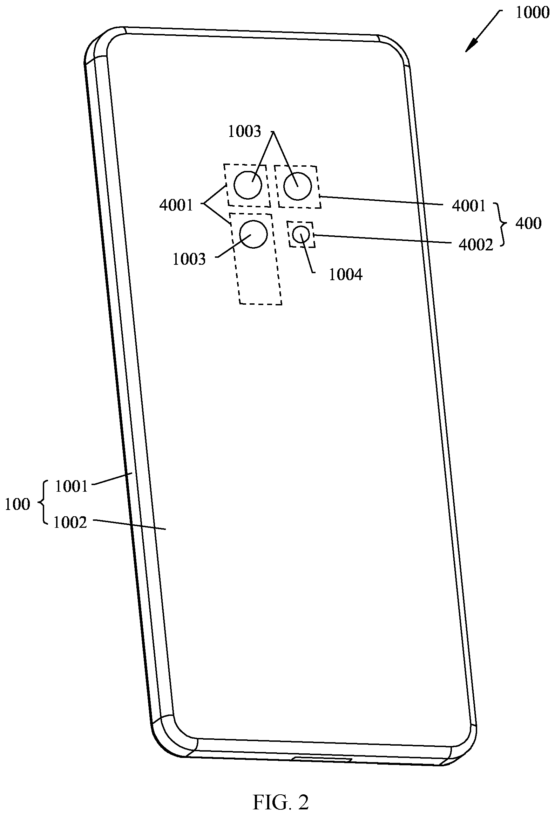

Refer to FIG. 1 and FIG. 2 together. FIG. 1 is a schematic diagram of a structure of an electronic device 1000 according to an embodiment of this application, and FIG. 2 is a schematic diagram of a structure of the electronic device 1000 shown in FIG. 1 from another angle. This embodiment is described by using an example in which the electronic device 1000 is a mobile phone.

The electronic device 1000 includes a housing 100, a display 200, a front-facing camera assembly 300, a rear-facing camera assembly 400, a mainboard 500, a processor 600, a memory 700, and a battery 800. The display 200 is configured to display an image, and the display 200 may be further integrated with a touch function. The display 200 is mounted on the housing 100. The housing 100 may include a bezel 1001 and a rear cover 1002. The display 200 and the rear cover 1002 are respectively mounted on two sides opposite to each other of the bezel 1001. In this embodiment, in an external space of the electronic device 1000, space facing the display 200 is defined as the front of the electronic device 1000, and space facing the rear cover 1002 is defined as the rear of the electronic device 1000.

In some embodiments, the front-facing camera assembly 300 is located in the housing 100 and is located below the display 200. The display 200 is provided with a light transmitting part 2001, and the front-facing camera assembly 300 collects light from the front of the electronic device 1000 through the light transmitting part 2001, to implement image shooting. The front-facing camera assembly 300 may include a camera module described in the following embodiments, or may include a camera module of another structure.

In some embodiments, at least one camera hole 1003 is disposed on the rear cover 1002. The rear-facing camera assembly 400 is located in the housing 100. The rear-facing camera assembly 400 collects light from the rear of the electronic device 1000 through the at least one camera hole 1003, to implement image shooting. In embodiments of this application, "at least one" includes two cases: "one" and "a plurality of", "a plurality of" means two or more than two, and "more than two" includes two. The rear-facing camera assembly 400 includes at least one camera module 4001, for example, may include one or more of a standard camera module, a long-focus camera module, a wide-angle camera module, an ultra-long-focus camera module, or an ultra-wide-angle camera module. For example, the rear-facing camera assembly 400 includes a standard camera, a wide-angle camera, and a periscope long-focus camera. The camera module 4001 of the rear-facing camera assembly 400 may include a camera module described in the following embodiments, or may include a camera module of another structure.

In some embodiments, the rear-facing camera assembly 400 may further include a flash module 4002. The rear cover 1002 is provided with a flash hole 1004. The flash module 4002 is located in the housing 100, and emits light through the flash hole 1004.

In some embodiments, the mainboard 500 is located in the housing 100, and the processor 600 and the memory 700 are fastened to the mainboard 500. The display 200, the front-facing camera assembly 300, and the rear-facing camera assembly 400 are coupled to the processor 600. The memory 700 is configured to store computer program code. The computer program code includes computer instructions. The processor 600 is configured to invoke computer instructions to enable the electronic device 1000 to perform a corresponding operation, for example, enable the display 200 to display a target image, or enable the front-facing camera assembly 300 or the rear-facing camera assembly 400 to collect the target image. The battery 800 is configured to supply power to the electronic device 1000.

In some embodiments, the electronic device 1000 may further include one or more of function modules such as an antenna module, a mobile communication module, a sensor module, a motor, a microphone module, or a speaker module. The function module is coupled to the processor 600. The antenna module is configured to transmit and receive an electromagnetic wave signal. The antenna module may include a plurality of antennas, and each antenna may be configured to cover one or more communication frequency bands. Different antennas may be further multiplexed to improve antenna utilization. The mobile communication module may provide a solution applied to the electronic device 1000 for wireless communication such as 2G/3G/4G/5G. The sensor module may include one or more of a pressure sensor, a gyroscope sensor, a barometric pressure sensor, a magnetic sensor, an acceleration sensor, a distance sensor, an optical proximity sensor, a fingerprint sensor, a temperature sensor, a touch sensor, or an ambient light sensor. The motor may generate a vibration prompt. The motor may be used for an incoming call vibration prompt, or may be used for a touch vibration feedback. The microphone module may be configured to convert a sound signal into an electrical signal. The speaker module is configured to convert an electrical signal into a sound signal.

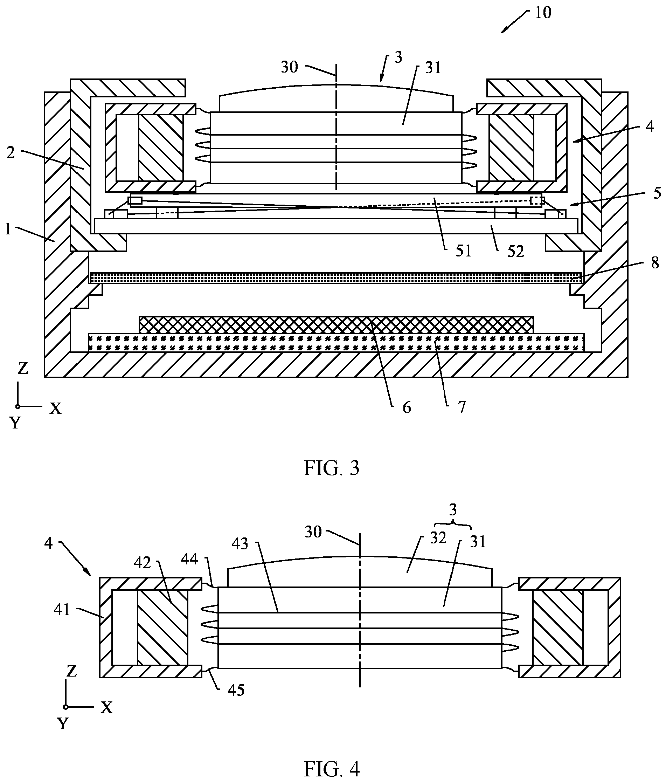

FIG. 3 is a schematic diagram of a structure of a camera module 10 according to an embodiment of this application. For ease of description of the camera module 10 in the following, a width direction of the camera module 10 is defined as a direction X shown in the figure, a length direction of the camera module 10 is defined as a direction Y shown in the figure, a thickness direction of the camera module 10 is defined as a direction Z shown in the figure, and the width direction X, the length direction Y, and the thickness direction Z of the camera module 10 are perpendicular to each other. FIG. 3 clearly shows a structure of the camera module 10, and shows partial filling of the structure of the camera module 10.

In some embodiments, the camera module 10 includes a module support 1, a motor support 2, a lens assembly 3, a voice coil motor 4, an SMA motor 5, an image sensor 6, and a circuit board 7.

The module support 1 is configured to fasten, support, and protect other components of the camera module 10. The module support 1 may be an integrally formed structure, or an integrated structure formed by fastening a plurality of parts in an assembly manner (for example, bonding).

The motor support 2 is mounted on an inner side of the module support 1 and fixedly connected to the module support 1. The motor support 2 may be a hollow structure with openings at both ends. The lens assembly 3, the voice coil motor 4, and the SMA motor 5 are mounted inside the motor support 2. In other words, the lens assembly 3, the voice coil motor 4, and the SMA motor 5 are all mounted inside the module support 1. In this embodiment, the motor support 2, the lens assembly 3, the voice coil motor 4, and the SMA motor 5 are all mounted on the motor support 2. This facilitates assembly of these components for modularization, thereby simplifying an assembly process of the camera module 10, and reducing costs of the camera module 10.

The SMA motor 5 is fastened to the motor support 2, the voice coil motor 4 is fastened above the SMA motor 5, the lens assembly 3 is mounted inside the voice coil motor 4, and a light exit side of the lens assembly 3 is disposed close to the SMA motor 5. Light enters the lens assembly 3 from a light incident side of the lens assembly 3, and exits the lens assembly 3 from the light exit side of the lens assembly 3. The lens assembly 3 has a light convergence function. The lens assembly 3 has an optical axis 30, and an optical axis direction of the lens assembly 3 is the same as the thickness direction Z of the camera module 10. The voice coil motor 4 is configured to drive the lens assembly 3 to move along the optical axis direction of the lens assembly 3, to implement auto focus (auto focus, AF). The SMA motor is configured to drive the voice coil motor 4 and the lens assembly 3 to move on a plane perpendicular to the optical axis direction of the lens assembly 3, that is, move on an XY plane of the camera module 10, to implement optical image stabilization.

The circuit board 7 is mounted inside the module support 1, and is located on a side of the SMA motor 5 facing away from the lens assembly 3. For example, a part of the circuit board 7 is fixedly connected to the module support 1, and a part (not shown in the figure) of the circuit board 7 extends to the outside of the module support 1. The part that is of the circuit board 7 and that is located outside the module support 1 may be electrically connected to the mainboard 500 of the electronic device 1000, so that the camera module 10 is coupled to the processor 600. The circuit board 7 is configured to transmit a control signal and an image signal of the camera module 10. For example, an electrical connector is disposed at an end of the circuit board 7 that is configured to connect to the mainboard 500. The electrical connector is connected to an electrical connector on the mainboard 500, so that the camera module 10 is electrically connected to a circuit and a component (for example, the processor 600) on the circuit board 7. The circuit board 7 may be a soft-hard combination circuit board, or may be a flexible circuit board, or may be an integrated circuit board formed by connecting a rigid circuit board and a flexible circuit board. A specific architecture of the circuit board 7 is not limited in this application. The electrical connector on the circuit board 7 may be a board to board (board to board, BTB) connector or the like. In some other embodiments, coupling between the camera module 10, and the circuit and the component on the mainboard 500 may alternatively be implemented in a wireless connection manner. In some other embodiments, the circuit board 7 may alternatively be fastened to the outside of the module support 1. In this case, one end of the module support 1 may be fastened to one side surface of the circuit board 7.

The image sensor 6 is mounted inside the module support 1, and is located on a side of the SMA motor 5 facing away from the lens assembly 3. The image sensor 6 is fastened to a side of the circuit board 7 facing the SMA motor 5. For example, the image sensor 6 may be fastened to the circuit board 7 by bonding (for example, by glue dispensing). In some other embodiments, the image sensor 6 may alternatively be fastened to the circuit board 7 in another fastening manner such as soldering or snapping. The image sensor 6 converts an optical image on a light-sensitive surface of the image sensor 6 into an electrical signal in a corresponding proportion to the optical image by using an optical-to-electrical conversion function of an optoelectronic device. The light-sensitive surface of the image sensor 6 is disposed facing the lens assembly 3. The image sensor 6 may be a charge coupled device (charge coupled device, CCD), a complementary metal-oxide-semiconductor (complementary metal-oxide-semiconductor, CMOS) photoelectric transistor, a thin film transistor (thin film transistor, TFT), or the like. In some embodiments, the image sensor 6 may be electrically connected to the circuit board 7 by using a plurality of bonding wires (bonding wires). The bonding wires may be gold wires or the like. In some other embodiments, the image sensor 6 may also be packaged on the circuit board 7 by using a ball grid array (ball grid array, BGA).

As shown in FIG. 3, in some embodiments, the camera module 10 may further include an IR cut filter (IR cut filter) 8. The IR cut filter 8 is mounted inside the module support 1 and located between the lens assembly 3 and the image sensor 6. In the thickness direction Z of the camera module 10, the IR cut filter 8, the lens assembly 3, and the image sensor 6 are stacked at a spacing from one another. The IR cut filter 8 is configured to filter infrared light, to improve imaging quality of the camera module 10. For example, the IR cut filter 8 may be made of blue glass (blue glass). In some other embodiments, the IR cut filter 8 may alternatively not be disposed in the camera module 10.

FIG. 4 is a schematic diagram of a structure of the voice coil motor 4 and the lens assembly 3 of the camera module 10 shown in FIG. 3.

In some embodiments, the lens assembly 3 includes a lens barrel 31 and at least one lens 32 fastened to an inner side of the lens assembly 3. For example, there may be a plurality of lenses 32, and optical axes of the plurality of lenses 32 coincide to form a lens group, so as to implement better optical performance. The lens group may include at least one convex lens and at least one concave lens. In some embodiments, the lens group may alternatively include a self-owned curved-surface lens. In some other embodiments, there may alternatively be one lens 32, to simplify a structure of the lens assembly 3. In this case, the lens 32 may be a convex lens to converge light. A specific quantity and a combination manner of the lenses 32 are not strictly limited in embodiments of this application. The optical axis 30 of the lens assembly 3 is an optical axis of the lens or the lens group.

The voice coil motor 4 includes a mounting bracket 41, a magnet component 42, a voice coil 43, an upper spring 44, and a lower spring 45. The mounting bracket 41 is a hollow structure with openings at both ends. The magnet component 42 is fastened to an inner side of the mounting bracket 41. The lens assembly 3 is located inside the magnet component 42. The voice coil 43 is located between the lens barrel 31 and the magnet component 42, and is fixedly connected to the lens barrel 31. When the voice coil 43 is electrified, the lens assembly 3 is actuated to move in a direction parallel to the optical axis of the lens assembly 3. One side of the upper spring 44 is fixedly connected to an upper end of the lens barrel 31, and the other side is fixedly connected to the mounting bracket 41. One side of the lower spring 45 is fixedly connected to a lower end of the lens barrel 31, and the other side is fixedly connected to the mounting bracket 41.

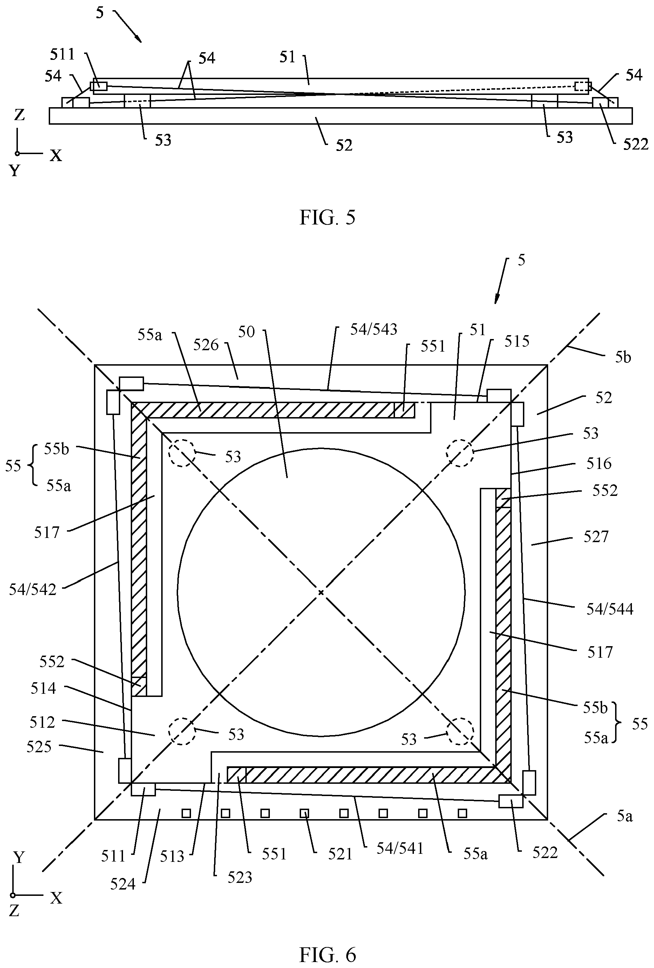

FIG. 5 is a schematic diagram of a structure of the SMA motor 5 of the camera module 10 shown in FIG. 3.

In some embodiments, the SMA motor 5 includes an upper component 51, a lower component 52, a plurality of bearings (bearings) 53, and four SMA wires 54. The lower component 52 and the upper component 51 are stacked. For example, the lower component 52 and the upper component 51 are stacked at a spacing from each other in the thickness direction Z of the camera module 10. The plurality of bearings 53 are located between the lower component 52 and the upper component 51. One end of each bearing 53 is fixedly connected to the lower component 52, and the other end is slidably connected to the upper component 51. The plurality of bearings 53 are configured to form a physical gap between the upper component 51 and the lower component 52.

Refer to FIG. 3 and FIG. 5. The lower component 52 of the SMA motor 5 is fixedly connected to the motor support 2, and the motor support 2 is fixedly connected to the module support 1. Therefore, the lower component 52 of the SMA motor 5 is indirectly and fixedly connected to the module support 1. For example, the lower component 52 of the SMA motor 5 may be directly bonded to the motor support 2, to implement high structural stability of the camera module 10. In some other embodiments, the lower component 52 may alternatively be fastened to the motor support 2 in another manner such as clamping or soldering. A manner of connecting the lower component 52 to the motor support 2 is not strictly limited in embodiments of this application.

The lens assembly 3 is mounted on the voice coil motor 4, and the voice coil motor 4 is fastened to the upper component 51 of the SMA motor 5. Therefore, the lens assembly 3 is indirectly mounted on the upper component 51 of the SMA motor 5, and the lens assembly 3 moves with the upper component 51 of the SMA motor 5. In some other embodiments, the motor support 2 may not be disposed in the camera module 10, and the lower component 52 of the SMA motor 5 is directly and fixedly connected to the module support 1. In some other embodiments, the voice coil motor 4 may not be disposed in the camera module 10, and the lens barrel 31 of the lens assembly 3 is directly mounted on the upper component 51 of the SMA motor 5. In this case, the camera module 10 is an image stabilization module with prime lens.

Refer to FIG. 5 again. One end of each SMA wire 54 is fixedly connected to the upper component 51, and the other end is fixedly connected to the lower component 52. The SMA wires 54 shrink when being electrified and heated. The SMA wires 54 are made of a shape memory alloy (shape memory alloy, SMA) material, for example, a nickel-titanium alloy material. Shape memory alloys are a kind of metals with a shape memory effect. Generally, a metal material first has elastic deformation while being applied with an external force, and may be restored to its original shape after the external force is removed. If the external force continues to be applied, the metal material may have plastic deformation after reaching its yield point, and may not be restored to its original shape even being heated, as the plastic deformation is permanent after the external force is removed. The shape memory alloy is a kind of alloy material which can completely eliminate its deformation at a lower temperature and can be restored to its original shape after being heated. A basic working principle of a shape memory alloy material is to perform shape memory training (training) on the material by heating the material to a critical temperature and deforming the material to a specific extent. After a martensite phase is generated by cooling and then is heated to the critical temperature again, a low-temperature martensite phase is transformed into a high-temperature austenite phase through a reverse phase transformation (that is, a reverse phase change). In this way, the material is restored to what it was before deformation.

In this embodiment, heat generated when the SMA wires 54 are electrified leads to a temperature rise of the SMA wires 54, so that a low-temperature martensite phase is transformed into a high-temperature austenite phase through a reverse phase transformation. The SMA wires 54 are restored to what they were before deformation. In this way, the SMA wires 54 shrink. A length change due to shrinkage of the SMA wires 54 is essentially caused by a transformation between material crystal phase structures, to be specific, the transformation between martensite and austenite. Gravity generated due to a crystal structure change (that is, a gap change between atoms) between microscopic particles makes a pulling force generated when the macro SMA wires 54 shrink much greater than electromagnetic forces between common magnet coils. Therefore, the SMA wires 54 may shrink to actuate heavier load, that is, may implement large load. In this way, the SMA motor 5 can implement a large driving force with a small size.

In this embodiment, because the SMA wires 54 shrink when being electrified and heated, a corresponding pulling force is generated on the upper component 51. Therefore, the camera module 10 may control electrical signals of the four SMA wires 54, so that a resultant force applied by the four SMA wires 54 to the upper component 51 is towards an expected direction, to drive the upper component 51 to carry the voice coil motor 4 and the lens assembly 3 to move to an expected direction and position. In this way, the camera module 10 can implement image stabilization by translating the lens assembly 3.

FIG. 6 is a top view of the SMA motor 5 shown in FIG. 5 in some embodiments.

The SMA motor 5 includes a transparent area 50, and the transparent area 50 allows light to pass through. A part of the SMA motor 5 corresponding to the transparent area 50 is hollowed out, or a transparent structure is disposed on the SMA motor 5. For example, the upper component 51 of the SMA motor 5 is provided with a through hole located in the transparent area 50, the lower component 52 is provided with a through hole located in the transparent area 50, and the bearings 53 and the SMA wires 54 are all located outside the transparent area 50.

Refer to FIG. 3 and FIG. 6. The lens 32 of the lens assembly 3 directly faces the transparent area 50 of the SMA motor 5, and the image sensor 6 is configured to receive light passing through the lens assembly 3 and the transparent area 50. When the image sensor 6 is configured to capture visible light, the transparent area 50 of the SMA motor 5 allows at least the visible light to pass through. When the image sensor 6 is configured to capture invisible light, the transparent area 50 of the SMA motor 5 allows at least the corresponding invisible light to pass through.

Refer to FIG. 6 again. The SMA motor 5 has a first reference plane 5a and a second reference plane 5b, and the first reference plane 5a intersects with the second reference plane 5b. For example, both the first reference plane 5a and the second reference plane 5b pass through the optical axis 30 of the lens assembly 3 (as shown in FIG. 3). The first reference plane 5a and the second reference plane 5b are perpendicular to each other. In another embodiment, an angle between the first reference plane 5a and the second reference plane 5b may be another angle. This is not strictly limited in this application.

The four SMA wires 54 are divided into two pairs. The two pairs of SMA wires 54 are symmetrically disposed relative to the first reference plane 5a. Two SMA wires 54 of a same pair are symmetrically disposed relative to the second reference plane 5b. For example, the four SMA wires 54 include a first SMA wire 541, a second SMA wire 542, a third SMA wire 543, and a fourth SMA wire 544. The first SMA wire 541 and the second SMA wire 542 form a first pair of SMA wires, and the third SMA wire 543 and the fourth SMA wire 544 form a second pair of SMA wires. The first pair of SMA wires and the second pair of SMA wires are symmetrically disposed relative to the first reference plane 5a. The first SMA wire 541 and the second SMA wire 542 are symmetrically disposed relative to the second reference plane 5b. The third SMA wire 543 and the fourth SMA wire 544 are symmetrically disposed relative to the second reference plane 5b.

In this embodiment, a position relationship among the four SMA wires 54 is limited, so that the camera module 10 can control, by controlling the electrical signals in the four SMA wires 54, the resultant force applied by the four SMA wires 54 to the upper component 51 to move along the first reference plane 5a or move along the second reference plane 5b. In addition, combined displacement of displacement on the first reference plane 5a and displacement on the second reference plane 5b enables the upper component 51 together with the lens assembly 3 to move to any position in the XY plane (that is, a plane perpendicular to the optical axis of the lens assembly 3) of the camera module 10. In this way, optical image stabilization is implemented.

In some embodiments, the upper component 51 forms a circuit, the lower component 52 forms a circuit, and the circuit of the lower component 52 is electrically connected to the circuit board 7 of the camera module 10, so that a drive path is formed between the SMA wire 54 and the circuit board 7. For example, as shown in FIG. 6, the lower component 52 includes a plurality of drive pins 521, and the plurality of drive pins 521 may be electrically connected to the circuit board 7 by using a conductive structure such as a conductor. The circuit of the upper component 51 and the circuit of the lower component 52 may be formed by electroplating, or by bonding the flexible circuit board 7, or by embedding metal through insert molding (Insert Molding). This is not strictly limited in this application.

As shown in FIG. 5 and FIG. 6, the upper component 51 includes a movable crimp (crimp) 511, and the movable crimp 511 is configured to fasten the SMA wire 54. The lower component 52 includes a fixed crimp 522, and the fixed crimp 522 is configured to fasten the SMA wire 54. One end of the SMA wire 54 is fastened to the upper component 51 by using the movable crimp 511, and the other end is fastened to the lower component 52 by using the fixed crimp 522. For example, the fixed crimp 522 and the movable crimp 511 may be made of a conductive material or form a conductive structure, so that the SMA wire 54 is electrically connected to the upper component 51 and the lower component 52.

It may be understood that, the four SMA wires 54 of the camera module 10 may have a plurality of specific connection manners if the foregoing position relationship requirements are met. This embodiment takes one of the connection manners as an example for description.

As shown in FIG. 6, for example, the upper component 51 is approximately shaped as a rectangular plate. The upper component 51 includes an upper plate surface 512 facing the lens assembly 3 and peripheral side surfaces connected to a periphery of the upper plate surface 512. The lens assembly 3 is mounted on the upper plate surface 512 of the upper component 51. The peripheral side surfaces include a first side surface 513, a second side surface 514, a third side surface 515, and a fourth side surface 516 that are connected in sequence. The first side surface 513 and the second side surface 514 are symmetrically disposed relative to the second reference plane 5b. The third side surface 515 and the second side surface 514 are symmetrically disposed relative to the first reference plane 5a. The fourth side surface 516 and the third side surface 515 are symmetrically disposed relative to the second reference plane 5b. The first side surface 513 and the fourth side surface 516 are symmetrically disposed relative to the first reference plane 5a. In some other embodiments, the upper component 51 may alternatively have another shape, for example, a rounded rectangular plate shape or a circular plate shape. It may be understood that each side surface of the peripheral side surfaces of the upper component 51 adaptively changes with a shape of the upper component 51.

The lower component 52 includes a middle area 523 directly facing the upper component 51 and edge areas disposed around the middle area 523. The plurality of bearings 53 are fastened to the middle area 523. In this case, the plurality of bearings 53 support the upper component 51 more stably. For example, there are four bearings 53. The four bearings 53 are respectively supported at four diagonal corners of the upper component 51. The four bearings 53 may be located on the first reference plane 5a and the second reference plane 5b in pairs. A specific distance is formed between the plurality of bearings 53 and edges of the upper component 51, so that when the upper component 51 moves, the plurality of bearings 53 can keep in contact with the upper component 51 to support the upper component 51.

The edge areas of the lower component 52 include a first edge area 524, a second edge area 525, a third edge area 526, and a fourth edge area 527. The first edge area 524 and the first side surface 513 are disposed correspondingly. The second edge area 525 and the second side surface 514 are disposed correspondingly. The third edge area 526 and the third side surface 515 are disposed correspondingly. The fourth edge area 527 and the fourth side surface 516 are disposed correspondingly. The first edge area 524 and the fourth edge area 527 are symmetrically disposed relative to the first reference plane 5a. The third edge area 526 and the second edge area 525 are symmetrically disposed relative to the first reference plane 5a. The fourth edge area 527 and the third edge area 526 are symmetrically disposed relative to the second reference plane 5b. The first edge area 524 and the fourth edge area 527 are symmetrically disposed relative to the first reference plane 5a.

It may be understood that, in this embodiment, the lower component 52 is approximately shaped as a rectangular plate. In some other embodiments, the shape of the lower component 52 may alternatively change adaptively with the shape of the upper component 51. In some other embodiments, the shape of the lower component 52 may alternatively be different from the shape of the upper component 51. This is not strictly limited in this application.

It may be understood that, in this embodiment, the first edge area 524, the second edge area 525, the third edge area 526, and the fourth edge area 527 are sequentially connected to form continuous edge areas. In another embodiment, the first edge area 524, the second edge area 525, the third edge area 526, and the fourth edge area 527 may alternatively be disposed at a spacing from one another, or may be partially spaced and partially continuous. This is not strictly limited in this application.

One end of the first SMA wire 541 is fastened to an end that is of the first side surface 513 of the upper component 51 and that is close to the second side surface 514. The other end of the first SMA wire 541 is fastened to an end that is of the first edge area 524 of the lower component 52 and that is close to the fourth edge area 527. The second SMA wire 542 and the first SMA wire 541 are symmetrically disposed relative to the second reference plane 5b. One end of the second SMA wire 542 is fastened to an end that is of the second side surface 514 of the upper component 51 and that is close to the first side surface 513. The other end of the second SMA wire 542 is fastened to an end that is of the second edge area 525 of the lower component 52 and that is close to the third edge area 526. The third SMA wire 543 and the second SMA wire 542 are symmetrically disposed relative to the first reference plane 5a. One end of the third SMA wire 543 is fastened to an end that is of the third side surface 515 of the upper component 51 and that is close to the fourth side surface 516. The other end of the third SMA wire 543 is fastened to an end that is of the third edge area 526 of the lower component 52 and that is close to the second edge area 525. The fourth SMA wire 544 and the third SMA wire 543 are symmetrically disposed relative to the second reference plane 5b. One end of the fourth SMA wire 544 is fastened to an end that is of the fourth side surface 516 of the upper component 51 and that is close to the third side surface 515. The other end of the fourth SMA wire 544 is fastened to an end that is of the fourth edge area 527 of the lower component 52 and that is close to the first edge area 524.

In this embodiment, one end of the SMA wire 54 is fastened at a diagonal corner of the upper component 51, and the other end is fastened at a diagonal corner of the lower component 52, so that the SMA wire 54 can have a sufficient length when space in the SMA motor 5 is limited. In this way, the SMA wire 54 has a sufficient amount of expansion, so that the SMA motor 5 can have a larger actuation stroke range, and the camera module 10 can have better image stabilization performance.

In some other embodiments, one end of the first SMA wire 541 may alternatively be fastened to one end of the first side surface 513 of the upper component 51 close to the fourth side surface 516. The other end of the first SMA wire 541 is fastened to one end of the first edge area 524 of the lower component 52 close to the second edge area 525. Positions of the second SMA wire 542, the third SMA wire 543, and the fourth SMA wire 544 adaptively change with a position of the first SMA wire 541.

It may be understood that, positions of both ends of the SMA wire 54 may be disposed by using the movable crimp 511 of the upper component 51 and the fixed crimp 522 of the lower component 52. In other words, positions of the movable crimp 511 and the fixed crimp 522 are set based on a position requirement of the SMA wire 54. This is not strictly limited in this application.

It may be understood that, in the thickness direction Z of the camera module 10, heights of the four SMA wires 54 may be the same, in other words, a height at an end connected to the upper component 51 of the SMA wire 54 is the same as a height at an end connected to the lower component 52 of the SMA wire 54, so that the four SMA wires 54 drive the upper component 51 to move. In FIG. 5, to conveniently show structures and position differences of the plurality of SMA wires 54, the SMA wires 54 are drawn in a tilting manner. For example, structures and positions of crimps (for example, the fixed crimp 522 and the movable crimp 511 in FIG. 5) used to fasten the SMA wires 54 may be designed, so that positions of the SMA wires 54 meet requirements. For example, the fixed crimp 522 in FIG. 5 may have a large volume, or may be designed as a small boss structure, so that heights at both ends of the SMA wire 54 are consistent. Certainly, in another embodiment, the crimp may alternatively have another implementation structure. This is not strictly limited in this application.

Refer to FIG. 6 again. In some embodiments, the SMA motor 5 may further include two spring arms (spring arms) 55. Hatching is performed on structures of the spring arms 55 to highlight the spring arms 55 in FIG. 6. The spring arms 55 each are L-shaped. Each of the spring arms 55 includes a fixed end 551 and a movable end 552. The movable end 552 of the spring arm 55 is fastened to the upper component 51, and the fixed end 551 of the spring arm 55 is fastened to the lower component 52, for example, may be fastened to the middle area 523 of the lower component 52. The two spring arms 55 are centrosymmetrically disposed, and a symmetric center is an intersection line of the first reference plane 5a and the second reference plane 5b. When the upper component 51 moves, the two centrosymmetric spring arms 55 are deformed to a same extent.

In this embodiment, the spring arm 55 of the SMA motor 5 can balance and buffer a force exerted on the upper component 51 in a process in which the SMA wire 54 is electrified to drive the upper component 51 to carry the voice coil motor 4 and the lens assembly 3 to move, so that the upper component 51 moves more stably. When the SMA wire 54 is powered off, the spring arm 55 of the SMA motor 5 can further drive, by using an elastic force generated through deformation of the spring arm 55 in a process in which the SMA wire 54 is electrified to drive the upper component 51 to move, the upper component 51 to carry the voice coil motor 4 and the lens assembly 3 to move back to an initial position. In other words, in the SMA motor 5, the SMA wire 54 shrinks when being electrified, and the pulling force of the SMA wire 54 drives the upper component 51 to carry the voice coil motor 4 and the lens assembly 3 to generate a precise optical image stabilization stroke. After the SMA wire 54 is powered off, a restoring force of the spring arm 55 drives the upper component 51 to carry the voice coil motor 4 and the lens assembly 3 to move back to a natural center.

In addition, the fixed end 551 of the spring arm 55 is fastened to the middle area 523 of the lower component 52, so that activity space of the spring arm 55 does not overlap with activity space of the SMA wires 54. This may avoid interference between the spring arm 55 and the SMA wire 54 in a movement process of the upper component 51.

In some other embodiments, the fixed end 551 of the spring arm 55 may alternatively be fastened to a peripheral area of the lower component 52. A position for fastening the fixed end 551 of the spring arm 55 is not strictly limited in this application.

For example, the two spring arms 55 may be integrally formed on the upper component 51, to simplify an assembly structure of the SMA motor 5. In this way, the SMA motor 5 has better structural stability. For example, the spring arm 55 and the upper component 51 may be integrally formed by etching or in another manner. In another embodiment, the movable end 552 of the spring arm 55 may alternatively be fastened to the upper component 51 by soldering or the like. This is not strictly limited in this application. The fixed end 551 of the spring arm 55 may be fastened to the lower component 52 by soldering or the like. This is not strictly limited in this application.

As shown in FIG. 6, for example, the spring arm 55 includes a first branch 55a and a second branch 55b connected to the first branch 55a. An end that is of the first branch 55a and away from the second branch 55b is the movable end 552, and is fixedly connected to the upper component 51. An end that is of the second branch 55b and away from the first branch 55a is the fixed end 551, and is fixedly connected to the lower component 52. A first branch 55a of one spring arm 55 of the two spring arms 55 is parallel to the first side surface 513, and a second branch 55b of one spring arm 55 of the two spring arms 55 is parallel to the fourth side surface 516. A first branch 55a of the other spring arm 55 of the two spring arms 55 is parallel to the third side surface 515, and a second branch 55b of the other spring arm 55 of the two spring arms 55 is parallel to the second side surface 514. In this embodiment, shapes and positions of the two spring arms 55 adapt to the upper component 51, so that the two spring arms 55 have better balance and buffer effects on the upper component 51.

In some other embodiments, the first branch 55a of one spring arm 55 of the two spring arms 55 is parallel to the first side surface 513, and the second branch 55b of one spring arm 55 of the two spring arms 55 is parallel to the fourth side surface 516. An end that is of the first branch 55a of the spring arm 55 and away from the second branch 55b is the fixed end 551, and is fixedly connected to the lower component 52. An end that is of the second branch 55b and away from the first branch 55a is the movable end 552, and is fixedly connected to the upper component 51.

As shown in FIG. 6, in some embodiments, the peripheral side surfaces of the upper component 51 are partially recessed to form two L-shaped avoidance grooves 517. Each avoidance groove 517 extends from one side surface of the upper component 51 to another side surface of the upper component 51. The two spring arms 55 are respectively disposed corresponding to the two avoidance grooves 517. The movable end 552 of the spring arm 55 is fastened to a side wall of the avoidance groove 517, and the side wall of the avoidance groove 517 is connected to the peripheral side surface of the upper component 51.

In this embodiment, for the SMA motor 5, the avoidance groove 517 of the upper component 51 and space below the avoidance groove 517 are used as mounting space and activity space of the spring arm 55, so that the spring arm 55 and the upper component 51 are disposed more compactly. In this way, the SMA motor 5 is easier to be miniaturized.

In some other embodiments, the movable end 552 of the spring arm 55 may alternatively be fastened to a plate surface of the upper component 51 facing the lower component 52. In this case, no avoidance groove 517 may be disposed on the upper component 51, a structure of the upper component 51 is relatively complete, and the upper component 51 is easier to process.

In some embodiments of this application, the spring arm 55 has pre-pressure, to press the upper component 51 onto the bearing 53, so as to reduce a difference of the SMA motor 5 in different postures, and improve control precision of the SMA motor 5. It may be understood that when the SMA motor 5 has a downward posture on the lens assembly 3, the bearing 53 may be separated from the upper component 51 due to weight of the bearing 53. As a result, a relative position of the lens assembly 3 relative to the motor support 2 changes (that is, the relative position of the lens assembly 3 changes in different postures, which is referred to as posture difference impact). Consequently, performance of the motor varies in different postures.

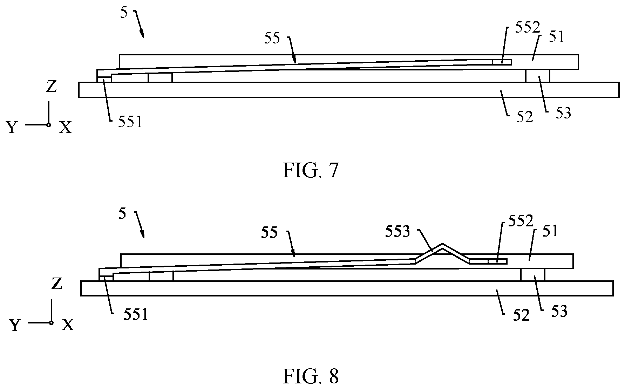

FIG. 7 is a schematic diagram of a structure of the spring arm 55 of the SMA motor 5 shown in FIG. 6 in some embodiments. FIG. 7 further shows structures of the upper component 51, the lower component 52, and the bearing 53 of the SMA motor 5, to facilitate description of the spring arm 55.

In some embodiments, a height difference is formed between the movable end 552 of the spring arm 55 and the fixed end 551 of the spring arm 55, to form the pre-pressure. A height at the movable end 552 of the spring arm 55 may be understood as a distance between a center of the movable end 552 of the spring arm 55 and a top surface (that is, a surface facing the upper component 51) of the lower component 52. A height at the fixed end 551 of the spring arm 55 may be understood as a distance between a center of the fixed end 551 of the spring arm 55 and the top surface of the lower component 52.

For example, the height difference between the movable end 552 of the spring arm 55 and the fixed end 551 of the spring arm 55 may be a height difference between a fixed position of the movable end 552 and a fixed position of the fixed end 551. For example, because the fixed end 551 of the spring arm 55 is fastened to the lower component 52, the movable end 552 of the spring arm 55 is fastened to the upper component 51, and the upper component 51 is located above the lower component 52, the height difference is formed between the movable end 552 of the spring arm 55 and the fixed end 551 of the spring arm 55.

In some other embodiments, the height difference between the movable end 552 of the spring arm 55 and the fixed end 551 of the spring arm 55 may also be generated by a shape of the spring arm 55.

FIG. 8 is a schematic diagram of a structure of the spring arm 55 of the SMA motor 5 shown in FIG. 6 in some other embodiments. FIG. 8 further shows structures of the upper component 51, the lower component 52, and the bearing 53 of the SMA motor 5, to facilitate description of the spring arm 55.

In some other embodiments, the spring arm 55 may further include a bending part 553, the bending part 553 is located between the fixed end 551 and the movable end 552, and the bending part 553 protrudes in a direction away from the lower component 52 of the motor.

In this embodiment, the bending part 553 is configured to enable the spring arm 55 to form the pre-pressure. In this case, there may be a height difference between the movable end 552 and the fixed end 551 of the spring arm 55, and the pre-pressure is formed, or no pre-pressure is formed, or the pre-pressure is small. Alternatively, no height difference may be formed between the movable end 552 and the fixed end 551 of the spring arm 55.

Factors such as a shape, a size, and a position of the bending part 553 may be a structure shown in FIG. 8, or there may be another design solution. For example, a position of an upward bending inflection point and/or a position of a downward bending inflection point of the bending part are/is changed, or a shape of the bending part is changed. Factors such as a specific shape, size, and position of the bending part are not strictly limited in this application.

In some other embodiments, the spring arm 55 may alternatively not include the bending part 553, and the spring arm 55 implements the pre-pressure by using the height difference between the movable end 552 and the fixed end 551 or by using another design solution. A manner of forming the pre-pressure by the spring arm 55 is not strictly limited in this application.

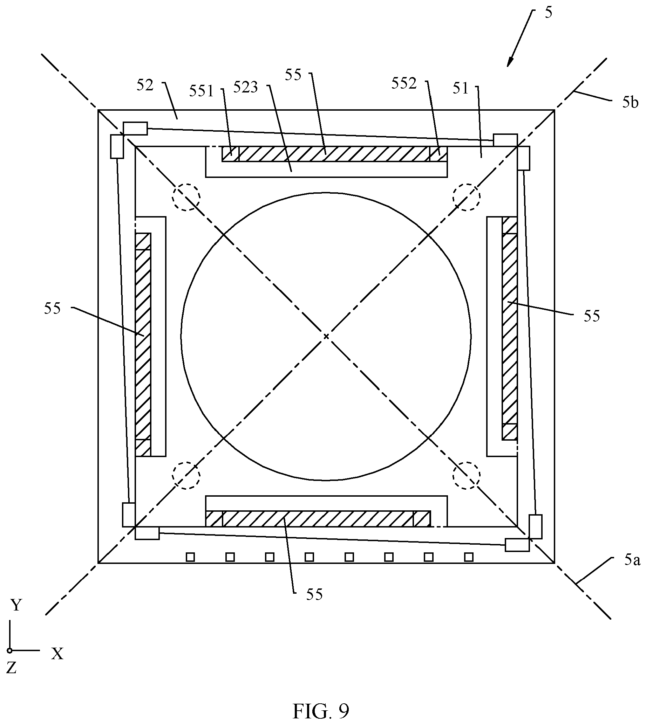

FIG. 9 is a top view of the SMA motor 5 shown in FIG. 5 in some other embodiments. In a case of no conflict, this embodiment includes most technical features of the embodiment in FIG. 5 (including features that are further described below for the embodiment in FIG. 5). A main difference between this embodiment and the foregoing embodiment lies in that:

In some embodiments, the SMA motor 5 further includes four spring arms 55. For example, the spring arms 55 each are shaped as a long strip. Each of the spring arms 55 includes the fixed end 551 and the movable end 552. The movable end 552 of the spring arm 55 is fastened to the upper component 51, and the fixed end 551 of the spring arm 55 is fastened to the lower component 52, for example, fastened to the middle area 523 of the lower component 52. The four spring arms 55 are divided into two pairs. The two pairs of spring arms 55 are symmetrically disposed relative to the first reference plane 5a. Two spring arms 55 of a same pair are symmetrically disposed relative to the second reference plane 5b. For example, the four spring arms 55 may be respectively parallel to four side surfaces of the upper component 51.

In this embodiment, the spring arm 55 of the SMA motor 5 can balance and buffer a force exerted on the upper component 51 in a process in which the SMA wire 54 is electrified to drive the upper component 51 to carry the voice coil motor 4 and the lens assembly 3 to move, so that the upper component 51 moves more stably. In addition, when the SMA wire 54 is powered off, the spring arm 55 of the SMA motor 5 can further drive, by using an elastic force generated through deformation of the spring arm 55 in a process in which the SMA wire 54 is electrified to drive the upper component 51 to move, the upper component 51 to carry the voice coil motor 4 and the lens assembly 3 to move back to an initial position. In addition, a disposition relationship of the four spring arms 55 corresponds to a disposition relationship of the SMA wires 54. Therefore, the four spring arms 55 can better implement a balance function and a restoration function.

In addition, the fixed end 551 of the spring arm 55 is fastened to the middle area 523 of the lower component 52, so that activity space of the spring arm 55 does not overlap with activity space of the SMA wires 54. This may avoid interference between the spring arm 55 and the SMA wire 54 in a movement process of the upper component 51.

It may be understood that the spring arm 55 shown in FIG. 9 may also have a pre-pressure, and a solution of setting the pre-pressure may be the solution in FIG. 7 or the solution in FIG. 8.

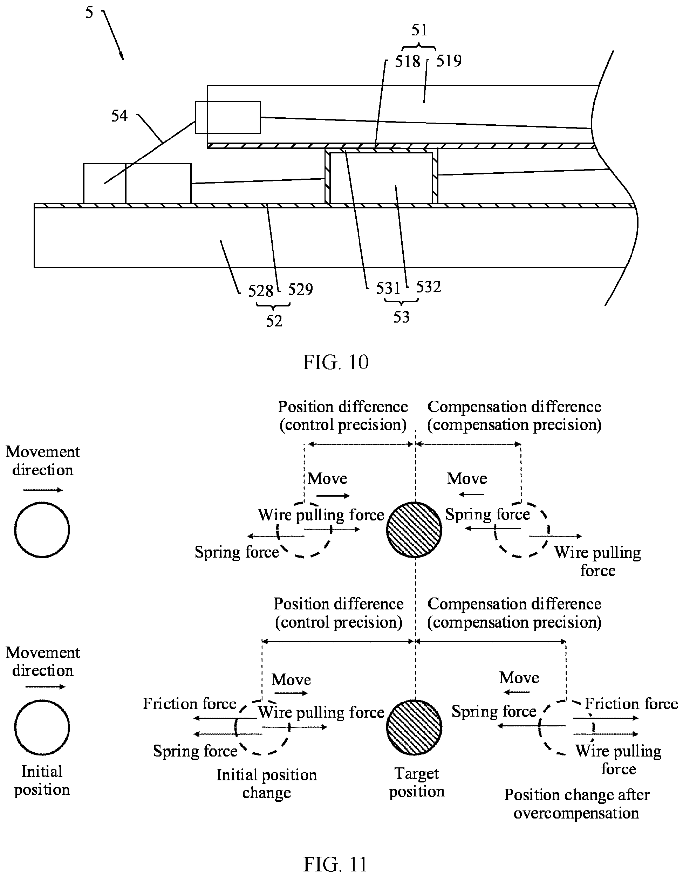

FIG. 10 is a schematic diagram of a partial structure of the SMA motor 5 shown in FIG. 5. FIG. 10 clearly shows a structure of the SMA motor 5, and shows partial filling of the structure of the SMA motor 5.

In some embodiments, each bearing 53 of the SMA motor 5 includes a lubrication coating 531. The lubrication coating 531 is disposed at an end that is of the bearing 53 and close to the upper component 51, and is in contact with the upper component 51.

In this embodiment, the lubrication coating 531 can reduce a friction coefficient between the upper component 51 and the bearing 53. Therefore, in a process in which the SMA wire 54 of the SMA motor 5 pulls the upper component 51 and the lens assembly 3 to move relative to the bearing 53 and implements image stabilization, a friction force between the upper component 51 and the bearing 53 is small, and travel control precision of the SMA motor 5 is high, so that a jitter amount of the upper component 51 and the lens assembly 3 is reduced, and low-frequency ripple jitter when an image shooting preview interface is still is reduced. In addition, because the lubrication coating 531 is disposed, in a solution in which the spring arm 55 forms the pre-pressure (refer to FIG. 7 or FIG. 8), a friction force between the upper component 51 and the bearing 53 may still be controlled to be very small.

FIG. 11 is a schematic diagram of impact of a friction force between an upper component and a bearing of an SMA motor on a lens assembly in a movement process. A movement process of the lens assembly (shown by a circle) shown in the upper part in FIG. 11 corresponds to a case in which there is no friction force or there is a little friction force between the upper component and the bearing (for example, the structure of the SMA motor 5 shown in FIG. 10). A movement process of the lens assembly shown in the lower part in FIG. 11 corresponds to a case in which there is a great friction force between the upper component and the bearing.

In the SMA motor, position control is implemented by using an actual length difference of two opposite SMA wires, and a length of an SMA wire is directly related to a resistance. In a specific interval, the length of the SMA wire is in a linear relationship with the resistance, that is, a longer SMA wire indicates a larger resistance. Therefore, when different drive control signals are sent to the four SMA wires, a resistance difference of two SMA wires at relative positions may be used as a feedback signal of a length difference of the SMA wires (that is, an actual position of the motor), to feed back positions of the upper component and the lens assembly in real time. In addition, a control system reads a resistance feedback parameter in real time, and then outputs a drive control signal in real time based on an environment jitter signal (this application mainly relates to lens jitter when the camera module is in a static state, and therefore a gyroscope signal is not considered) fed back by a gyroscope (gyroscope), to implement position control on the upper component and the lens assembly.

In an actual manufacturing and control process of the SMA motor, because original lengths of the four SMA wires are deviated, even if a same drive voltage signal is sent, wire shrinkage degrees are inconsistent. In addition, because friction exists between the bearing and the upper component, a target position of the control signal is deviated from an actual movement position of the upper component (that is, control precision is limited). Therefore, feedback-compensation is continuously performed between a resistance feedback signal and the drive control signal, and slight real-time jitter is generated on a preview interface.

The SMA motor uses the resistance of the SMA wire to feed back the movement position of the upper component in real time (the movement position of the upper component is a movement position of the lens assembly), and continuously performs feedback-compensation, that is, closed-loop feedback. Therefore, when there is a large friction force opposite to the movement direction, the lens assembly almost moves to a position due to resistance while the lens assembly should have accurately moved to the position (that is, control precision is reduced). In this case, the control system detects, through a resistor, that the lens assembly does not move to the theoretical position, and then increases a drive signal (that is, compensation) to increase the pulling force of the SMA wire, so that the lens assembly moves to the theoretical position. In addition, because of the friction force, the compensation is greater than that when there is no friction force. However, the compensation may be over-compensation (that is, compensation precision is limited). When the compensation is over-compensation, a driving force of the SMA wire is reduced. In this case, the lens assembly moves reversely to approach the theoretical position. In this case, a direction of the friction force changes, and impact on the compensation effect is greater than that when there is no friction force. As shown in FIG. 11, the friction force reduces control precision and compensation precision. Because resistance feedback-compensation is performed in real time, that is, the foregoing compensation action is continuously performed, a final result is that an actual lens assembly position fluctuates back and forth in the theoretical position, resulting in slight jitter (jitter) of a preview image of the camera module. Because of the friction force, this degree of jitter is more severe than that when there is no friction or when there is little friction. In this embodiment of this application, the SMA motor 5 is provided with the lubrication coating 531, so that a friction force between the upper component 51 and a support of the bearing 53 can be greatly reduced, control precision is improved, and a jitter amount (for example, a jitter amplitude and a quantity of jitter times) of the lens assembly 3 is reduced.

The applicant confirms through experiments that, in an image shooting application (including a video recording mode and a photo mode) of a camera module including an SMA motor, when the camera module is enabled, an image shooting preview interface is still, and no photographing is performed, that is, when an image stabilization function is enabled (serve-on) but the camera module has no image stabilization operation, low-frequency ripple jitter (jitter) can be observed on the image shooting preview interface. In addition, the jitter is magnified when a focus magnification is increased, and is more likely to be detected in a high-illumination environment. However, compared with a conventional solution, in this embodiment of this application, jitter of the camera module 10 using the SMA motor 5 on a static image shooting preview interface is significantly reduced.

Still refer to FIG. 10. In this embodiment of this application, the SMA motor 5 is provided with the lubrication coating 531 on the bearing 53, to reduce a friction force between the bearing 53 and the upper component 51. Therefore, travel control precision of the SMA motor 5 can be improved without affecting anti-jitter performance. A jitter amount is reduced by using hardware, so that an improvement effect is not affected due to a length of the SMA wire 54 or software driving. This has technical universality and does not increase a new reliability risk, and the SMA motor 5 can be mass produced without significantly increasing manufacturing costs.

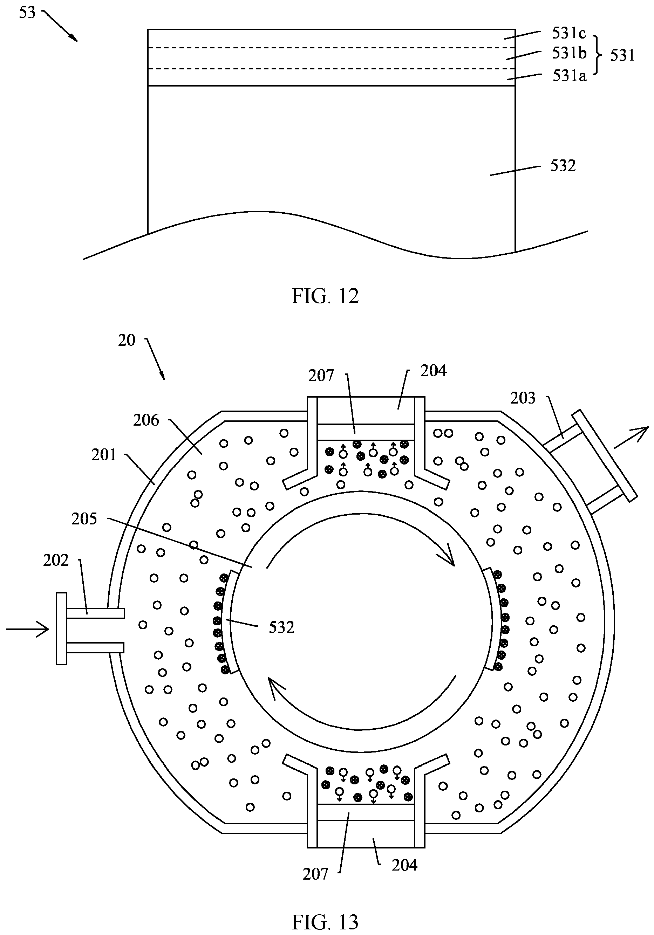

FIG. 12 is a schematic diagram of a structure of the bearing 53 of the SMA motor 5 shown in FIG. 10 in some embodiments.

In some embodiments, each bearing 53 further includes a bearing body 532. One end of the bearing body 532 is fastened to the lower component 52, and the lubrication coating 531 is fastened to the other end of the bearing body 532. For example, the bearing body 532 may be made of metal. In some other embodiments, the bearing body 532 may be made of an organic polymer material, for example, polyformaldehyde (polyformaldehyde, POM), or another type of material.

In some embodiments, the lubrication coating 531 includes a metal layer 531a, a metal inorganic compound layer 531b, and an inorganic layer 531c that are sequentially stacked. The metal layer 531a of the lubrication coating 531 is fastened to the bearing body 532. The inorganic layer 531c of the lubrication coating 531 is in contact with the upper component 51. The metal layer 531a and the metal inorganic compound layer 531b include a same element, and the metal inorganic compound layer 531b and the inorganic layer 531c include a same element.

In this embodiment, a top layer that is of the lubrication coating 531 and far away from the bearing body 532 is the inorganic layer 531c, and the inorganic layer 531c has high hardness and is smooth. Therefore, the lubrication coating 531 as a whole has better lubricating performance, and can effectively reduce a friction force between the bearing 53 and the upper component 51, so that travel control precision of the SMA motor 5 is better. In addition, the inorganic layer 531c can further play an insulation role, to effectively and electrically isolate the bearing 53 from the upper component 51, and reduce a hazard of a short circuit between the bearing 53 and the upper component 51.

In addition, a bottom layer that is of the lubrication coating 531 and fastened to the bearing body 532 is the metal layer 531a, and the metal layer 531a has high flexibility and is not prone to crack. Therefore, the lubrication coating 531 can be better fastened to the bearing body 532, and has high flexibility and high reliability. An intermediate layer located between the metal layer 531a and the inorganic layer 531c of the lubrication coating 531 is the metal inorganic compound layer 531b, the metal inorganic compound layer 531b and the metal layer 531a have a same element, and the metal inorganic compound layer 531b and the inorganic layer 531c also have a same element. Therefore, the metal inorganic compound layer 531b can smoothly transit between the metal layer 531a and the inorganic layer 531c, so that bonding performance between the metal layer 531a and the inorganic layer 531c is improved, and the lubrication coating 531 has high integrity and higher structural reliability.

In some embodiments, the inorganic layer 531c is a carbon layer, and a structure of a surface layer that is of the inorganic layer 531c and faces away from the metal inorganic compound layer 531b is a diamond-like structure. That is, a diamond-like carbon (diamond-like carbon, DLC) film is formed at the surface layer of the lubrication coating 531. The diamond-like carbon film is made of carbon elements, is similar in nature to a diamond, and has a substance in a graphite atomic composition structure. The diamond-like carbon film is an amorphous film, and has features of high hardness, high elastic modulus, a low friction factor, wear resistance, and good vacuum morphotactics, so that the lubrication coating 531 is wear-resistant, and a friction force between the bearing 53 and the upper component 51 can be effectively reduced.

In some embodiments, the metal layer 531a is a chromium layer, and the metal inorganic compound layer 531b is a carbon chromium compound layer. In this embodiment, chromium is used as a metal material of the metal layer 531a and the metal inorganic compound layer 531b of the lubrication coating 531, so that the carbon layer whose surface layer is a diamond-like structure has a better adhesion to the carbon chromium compound layer at the bottom thereof, and reliability of an overall structure of the lubrication coating 531 is higher.

For example, in this application, the lubrication coating 531 may be formed on the surface of the bearing body 532 by using a physical vapor deposition (physical vapor deposition, PVD) technology and a chemical vapor deposition (chemical vapor deposition, CVD) technology, so that the lubrication coating 531 has thin thickness, high strength, and a small friction coefficient.

For example, the physical vapor deposition technology is a technology in which high-energy plasma particles are used to bombard atoms or atomic groups of a material source (target) from the target under an approximate vacuum condition, and deposit the atoms or atomic groups on a surface of a substrate (that is, a plated object) under an action of an electric field, to form a film. One of the main methods of physical vapor deposition is sputtering coating. The basic principle of sputtering coating is to use a high-energy electric field to ionize cavity gases (argon gas is used as a conventional gas) into a plasma state in a vacuum condition, and accelerate the electric field to bombard the surface of the target at a high speed, so that atoms on the surface of the target obtain sufficient energy and sputter out from the surface of the target. Sputtered target particles deposit on the surface of the substrate, and gradually accumulate into a film, which is called sputtering coating. The high-energy particles in the sputtering coating are generally obtained from a cavity ambient gas of a device through glow discharge. Within an atmospheric pressure range of 10⁻²-10⁻⁴ Pa, the high-energy particles accelerate their movement in the electric field and bombard the target. When flying to the substrate, the sputtered target particles are prone to collide with gas molecules in a vacuum chamber. In this way, a movement direction is random, and the film is easy to be evenly deposited. Generally, a sputtering method of more than one target is referred to as co-sputtering (co-sputtering), and a method in which a chemical reaction occurs when a cavity ambient gas is mixed with sputtered particles is referred to as reactive sputtering (reactive sputtering). The PVD technology is generally used to grow metal films or metal inorganic compound films.

The principle of chemical vapor deposition (CVD) is relatively simple. CVD ionizes cavity gases and makes plasma gases react with each other to form compounds or simple substances. CVD is generally used to deposit inorganic nonmetallic films.

In this embodiment, the lubrication coating 531 is formed by using three phased technologies: conventional physical vapor deposition sputtering, physical vapor deposition reactive sputtering, and chemical vapor deposition sputtering. For example, in the first phase, a metal target (for example, chromium) is used, and the metal layer 531a of the lubrication coating 531 is plated on the bearing body 532 by using the conventional physical vapor deposition sputtering technology. This process is a conventional physical vapor deposition sputtering process. Subsequently, in the second phase, a chemical gas (for example, a gas containing element C such as acetylene (C₂H₂) and methane (CH₄)) is introduced into a vapor deposition cavity, and the chemical gas is ionized into plasmas. The plasmas participate in the deposition process and chemically react with metal ions to generate metal inorganic compounds (such as carbon chromium compounds). The metal inorganic compounds are stacked on the surface of the metal layer 531a of the lubrication coating 531 to form the metal inorganic compound layer 531b of the lubrication coating 531. This process is a physical vapor deposition reactive sputtering process. Then, in the third phase, a rate of reactive sputtering is gradually reduced to increase a rate of chemical vapor deposition sputtering, and then transition to a complete chemical vapor deposition sputtering phase is implemented. Inorganic insulators generated through chemical vapor deposition continue to cover the metal inorganic compound layer 531b of the lubrication coating 531, to form the inorganic layer 531c (for example, the carbon layer), and finally form the lubrication coating 531 with a three-layer stacked structure shown in FIG. 12.

FIG. 13 is a schematic diagram of a basic structure of a reaction device 20 for preparing the lubrication coating 531.

The reaction device 20 includes a cavity wall 201, an air inlet 202, a material outlet 203, two target mounting ports 204, and a bearing turntable 205. A reaction cavity 206 is formed on an inner side of the cavity wall 201, the air inlet 202 is connected to the reaction cavity 206 and the outside of the reaction device 20, the material outlet 203 is connected to the reaction cavity 206 and the outside of the reaction device 20, the target mounting ports 204 are connected to the reaction cavity 206 and are used to mount a target (target), and the bearing turntable 205 is configured to mount a substrate (substrate) of a to-be-plated layer. There may also be more target mounting ports 204.

In some embodiments, when the lubrication coating 531 shown in FIG. 12 is prepared by using the reaction device 20 shown in FIG. 13, the bearing body 532 is mounted on the bearing turntable 205, two metal targets 207 (for example, chromium) are respectively mounted on the two target mounting ports 204, and organic gas (for example, acetylene) enters from the air inlet 202. In a film coating process, the bearing body 532 rotates between the two metal targets 207. Plasma particles (for example, argon (Ar) ions, shown by hollow circles in the figure) of the reaction cavity 206 first bombard the metal target 207, so that target particles (shown by filled circles in the figure) sputter out. The metal layer 531a of the lubrication coating 531 is first formed on the bearing body 532, and then reaction gases are entered simultaneously, so that the reactive sputtering is started. In addition, a sputtering ratio of conventional metal sputtering and reactive sputtering is regulated, so that a deposition amount of the metal target 207 gradually decreases, a transition layer, that is, the metal inorganic compound layer 531b, generated through reactive sputtering gradually increases, and the metal inorganic compound layer 531b is formed on the metal layer 531a of the lubrication coating 531. Finally, metal sputtering is controlled to stop, transition to a chemical vapor deposition phase in which only the reaction gases react is performed, and the inorganic layer 531c is formed on the metal inorganic compound layer 531b of the lubrication coating 531.

It may be understood that the multi-layer structure of the lubrication coating 531 is actually an integrated structure, that is, an integrated coating structure. The metal layer 531a, the metal inorganic compound layer 531b, and the inorganic layer 531c transit gradually. An interface between the metal layer 531a and the metal inorganic compound layer 531b and an interface between the metal inorganic compound layer 531b and the inorganic layer 531c are both fuzzy interfaces, and are in a state in which two layers of materials are mixed with each other.

In this embodiment, a thickness of the lubrication coating 531 may be controlled to a micron (µm) level. For example, an overall thickness of the lubrication coating 531 may be within a range of 5 µm to 10 µm, and a thickness of the diamond-like structure on the surface of the inorganic layer 531c of the lubrication coating 531 may be within a range of 1 µm to 3 µm. Thickness of each layer of the lubrication coating 531 and an overall thickness of the lubrication coating 531 may also have other values or ranges. This is not strictly limited in this application.

In some other embodiments, the inorganic layer 531c of the lubrication coating 531 may also be a carbon layer whose surface layer has a non-diamond-like structure. In this case, the inorganic layer 531c of the lubrication coating 531 still has lubricity, but the lubricity is poorer than that in the foregoing solution having the surface layer with the diamond-like structure.

In some other embodiments, the inorganic layer 531c of the lubrication coating 531 is a carbon layer, and a structure of a surface layer that is of the inorganic layer 531c of the lubrication coating 531 and faces away from the metal inorganic compound layer 531b of the lubrication coating 531 is a diamond-like structure. The metal layer 531a of the lubrication coating 531 is a titanium (Ti) layer, and the metal inorganic compound layer 531b is a carbon titanium compound layer.

In some other embodiments, the inorganic layer 531c of the lubrication coating 531 is a silicon (Si) layer. The metal layer 531a of the lubrication coating 531 may be a titanium layer or a chromium layer, and the metal inorganic compound layer 531b is correspondingly a silicon titanium compound layer or a silicon chromium compound layer. In this case, a chemical gas that enters the reaction cavity 206 of the reaction device 20 may be silane.

In some other embodiments, the inorganic layer 531c of the lubrication coating 531 may also be made of another inorganic material that can implement lubrication, and the metal layer 531a of the lubrication coating 531 may also be made of another material. This is not strictly limited in this application.

Refer to FIG. 10 again. The lubrication coating 531 may also extend to a peripheral side surface of the bearing body 532. Specifically, the bearing body 532 includes a top surface facing the upper component 51, a bottom surface facing the lower component 52, and the peripheral side surface connected between the top surface and the bottom surface. The lubrication coating 531 covers the entire top surface, and may also cover a part of the peripheral side surface or the entire peripheral side surface.

Refer to FIG. 10. In some embodiments, the upper component 51 includes an upper component body 518 and an upper coating 519. The upper coating 519 is fastened to a side that is of the upper component body 518 and close to the bearing 53. For example, the upper coating 519 may be a lubrication coating. The upper coating 519 is in contact with the lubrication coating 531 of the bearing 53, to further reduce a friction force between the upper component 51 and the bearing 53, so that travel control precision of the SMA motor 5 is higher, and a jitter amount of the lens assembly 3 of the camera module 10 is reduced.

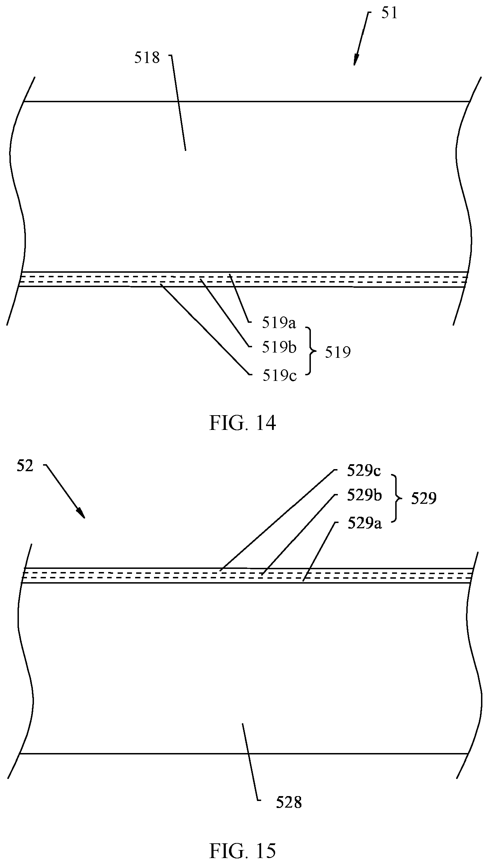

FIG. 14 is a schematic diagram of a partial structure of the upper component 51 of the SMA motor 5 shown in FIG. 10 in some embodiments. In some embodiments, the upper coating 519 includes a metal layer 519a, a metal inorganic compound layer 519b, and an inorganic layer 519c that are sequentially stacked. The metal layer 519a is fastened to the upper component body 518, the metal layer 519a and the metal inorganic compound layer 519b include a same element, and the metal inorganic compound layer 519b and the inorganic layer 519c include a same element.

In this embodiment, a top layer that is of the upper coating 519 and far away from the upper component body 518 is the inorganic layer 519c, and the inorganic layer 519c has high hardness and is smooth. Therefore, the upper coating 519 as a whole has better lubricating performance, and can effectively reduce a friction force between the bearing 53 and the upper component 51, so that travel control precision of the SMA motor 5 is better. In addition, the inorganic layer 519c can further play an insulation role, to effectively and electrically isolate the bearing 53 from the upper component 51, and reduce a hazard of a short circuit between the bearing 53 and the upper component 51.

In addition, a bottom layer that is of the upper coating 519 and fastened to the upper component body 518 is the metal layer 519a, and the metal layer 519a has high flexibility and is not prone to crack. Therefore, the upper coating 519 can be better fastened to the upper component body 518, and has high flexibility and high reliability. An intermediate layer located between the metal layer 519a and the inorganic layer 519c of the upper coating 519 is the metal inorganic compound layer 519b, the metal inorganic compound layer 519b and the metal layer 519a have a same element, and the metal inorganic compound layer 519b and the inorganic layer 519c also have a same element. Therefore, the metal inorganic compound layer 531b can smoothly transit between the metal layer 519a and the inorganic layer 519c, so that bonding performance between the metal layer 519a and the inorganic layer 519c is improved, and the upper coating 519 has high integrity and higher structural reliability.

In some embodiments, the inorganic layer 519c of the upper coating 519 is a carbon layer, and a structure of a surface layer that is of the inorganic layer 519c of the upper coating 519 and faces away from the metal inorganic compound layer 519b of the upper coating 519 is a diamond-like structure. That is, a diamond-like carbon (diamond-like carbon, DLC) film is formed at the surface layer of the upper coating 519. In this case, the inorganic layer 519c of the upper coating 519 enables good wear resistance of the upper coating 519, and can effectively reduce a friction force between the bearing 53 and the upper component 51.

In some embodiments, the metal layer 519a of the upper coating 519 is a chromium layer, and the metal inorganic compound layer 519b of the upper coating 519 is a carbon chromium compound layer. In this embodiment, chromium is used as a metal material of the metal layer 519a and the metal inorganic compound layer 519b of the upper coating 519, so that the carbon layer whose surface layer is a diamond-like structure has a better adhesion to the carbon chromium compound layer at the bottom thereof, and reliability of an overall structure of the upper coating 519 is higher.

In some other embodiments, the inorganic layer 519c of the upper coating 519 may also be a carbon layer whose surface layer has a non-diamond-like structure. In this case, the inorganic layer 519c of the upper coating 519 still has lubricity, but the lubricity is poorer than that in the foregoing solution having the surface layer with the diamond-like structure.

In some other embodiments, the inorganic layer 519c of the upper coating 519 is a carbon layer, and a structure of a surface layer that is of the inorganic layer 519c of the upper coating 519 and faces away from the metal inorganic compound layer 519b of the upper coating 519 is a diamond-like structure. The metal layer 519a of the upper coating 519 is a titanium (Ti) layer, and the metal inorganic compound layer 519b is a carbon titanium compound layer.

In some other embodiments, the inorganic layer 519c of the upper coating 519 is a silicon (Si) layer. The metal layer 519a of the upper coating 519 may be a titanium layer or a chromium layer, and the metal inorganic compound layer 519b is correspondingly a silicon titanium compound layer or a silicon chromium compound layer. In this case, a chemical gas that enters the reaction cavity 206 of the reaction device 20 may be silane.

In some other embodiments, the inorganic layer 519c of the upper coating 519 may also be made of another inorganic material that can implement lubrication, and the metal layer 519a of the upper coating 519 may also be made of another material. This is not strictly limited in this application.

In some other embodiments, when the upper coating 519 has no lubrication requirement and is an insulation coating, the upper coating 519 may also be entirely plated by using an organic polymer material.

In some embodiments, the upper component body 518 includes a bottom surface facing the lower component 52, and the upper coating 519 may cover all or a partial area of the bottom surface of the upper component body 518. When the upper coating 519 covers a partial area of the bottom surface of the upper component body 518, the partial area is mainly a contact area of the bearing 53.

In some other embodiments, the upper component 51 may not be provided with the upper coating 519, and the lubrication coating 531 of the bearing 53 is in direct contact with the upper component body 518. In this case, although the friction force between the bearing 53 and the upper component 51 is poorer than the structure in which the upper component 51 is provided with the upper coating 519, the lubrication coating 531 on the bearing 53 can still meet a requirement of greatly reducing the friction force between the bearing 53 and the upper component 51.

Refer to FIG. 10 again. In some embodiments, the lower component 52 includes a lower component body 528 and a lower coating 529. The lower coating 529 is fastened to a side that is of the lower component body 528 and close to the bearing 53. The lower coating 529 is an insulation coating. In this embodiment, the lower coating 529 of the lower component 52 can insulate the bearing 53 from the lower component 52, to reduce a hazard of a short circuit between the upper component 51 and the lower component 52.

FIG. 15 is a schematic diagram of a partial structure of the lower component 52 of the SMA motor 5 shown in FIG. 10 in some embodiments.

In some embodiments, the lower coating 529 includes a metal layer 529a, a metal inorganic compound layer 529b, and an inorganic layer 529c that are sequentially stacked. The metal layer 529a of the lower coating 529 is fastened to the lower component body 528, the metal layer 529a of the lower coating 529 and the metal inorganic compound layer 529b of the lower coating 529 include a same element, and the metal inorganic compound layer 529b of the lower coating 529 and the inorganic layer 529c of the lower coating 529 include a same element.

In this embodiment, a top layer that is of the lower coating 529 and away from the lower component body 528 is the inorganic layer 529c, and the inorganic layer 529c can play an insulation role. Therefore, the bearing 53 is effectively and electrically isolated from the lower component 52, and a hazard of a short circuit between the bearing 53 and the lower component 52 is reduced. In addition, a bottom layer that is of the lower coating 529 and fastened to the lower component body 528 is the metal layer 529a, and the metal layer 529a has high flexibility and is not prone to crack. Therefore, the lower coating 529 can be better fastened to the lower component body 528, and has high flexibility and high reliability. An intermediate layer located between the metal layer 529a and the inorganic layer 529c of the lower coating 529 is the metal inorganic compound layer 529b, the metal inorganic compound layer 529b and the metal layer 529a have a same element, and the metal inorganic compound layer 529b and the inorganic layer 529c also have a same element. Therefore, the metal inorganic compound layer 529b can smoothly transit between the metal layer 529a and the inorganic layer 529c, so that bonding performance between the metal layer 529a and the inorganic layer 529c is improved, and the lower coating 529 has high integrity and higher structural reliability.

In some embodiments, the inorganic layer 529c of the lower coating 529 is a carbon layer, the metal layer 529a of the lower coating 529 is a chromium layer, and the metal inorganic compound layer 529b of the lower coating 529 is a carbon chromium compound layer. In some other embodiments, the inorganic layer 529c of the lower coating 529 is a carbon layer, the metal layer 529a of the lower coating 529 is a titanium layer, and the metal inorganic compound layer 529b of the lower coating 529 is a carbon titanium compound layer.

In some other embodiments, the inorganic layer 529c of the lower coating 529 is a silicon (Si) layer. The metal layer 529a of the lower coating 529 may be a titanium layer or a chromium layer, and the metal inorganic compound layer 529b is correspondingly a silicon titanium compound layer or a silicon chromium compound layer. In this case, a chemical gas that enters the reaction cavity 206 of the reaction device 20 may be silane.

In some other embodiments, the inorganic layer 529c of the lower coating 529 may also be made of another inorganic material that can implement lubrication, and the metal layer 529a of the lower coating 529 may also be made of another material. This is not strictly limited in this application. In some other embodiments, the lower coating 529 may also be entirely plated by using an organic polymer material.

In some embodiments, the lower component body 528 includes a bottom surface facing the upper component 51, and the lower coating 529 may cover all or a partial area of the top surface of the lower component body 528. When the lower coating 529 covers a partial area of the top surface of the lower component body 528, the partial area is mainly a contact area of the bearing 53.

In some other embodiments, the lower component 52 may not be provided with the lower coating 529, the bearing body 532 is in direct contact with the lower component body 528, and insulation between the upper component 51 and the lower component 52 is implemented through the lubrication coating 531 of the bearing 53 and/or the upper coating 519 of the upper component 51. In some other embodiments, the lower component 52 is not provided with the lower coating 529, the upper component 51 is not provided with the upper coating 519, the bearing body 532 of the bearing 53 is in contact with the lower component 52, the lubrication coating 531 of the bearing 53 is in contact with the upper component 51, and insulation between the upper component 51 and the lower component 52 is implemented through the lubrication coating 531.

In some embodiments, there are a plurality of manners of fastening the bearing 53 and the lower component 52, which are determined based on different materials of the bearing 53. The bearing 53 may be fastened by using an adhesive, or may be fastened in another manner. For example, when the bearing 53 is made of a metal material, the bearing 53 may be fastened to the lower component 52 in a bonding manner. For example, when the bearing 53 is made of an organic polymer material such as polyformaldehyde (polyformaldehyde, POM), the bearing 53 may be fastened to the lower component 52 in a thermal forming bonding manner. In some other embodiments, the bearing 53 may alternatively be made of another material, or may be fastened to the lower component 52 in another fastening manner. This is not strictly limited in this embodiment of this application.

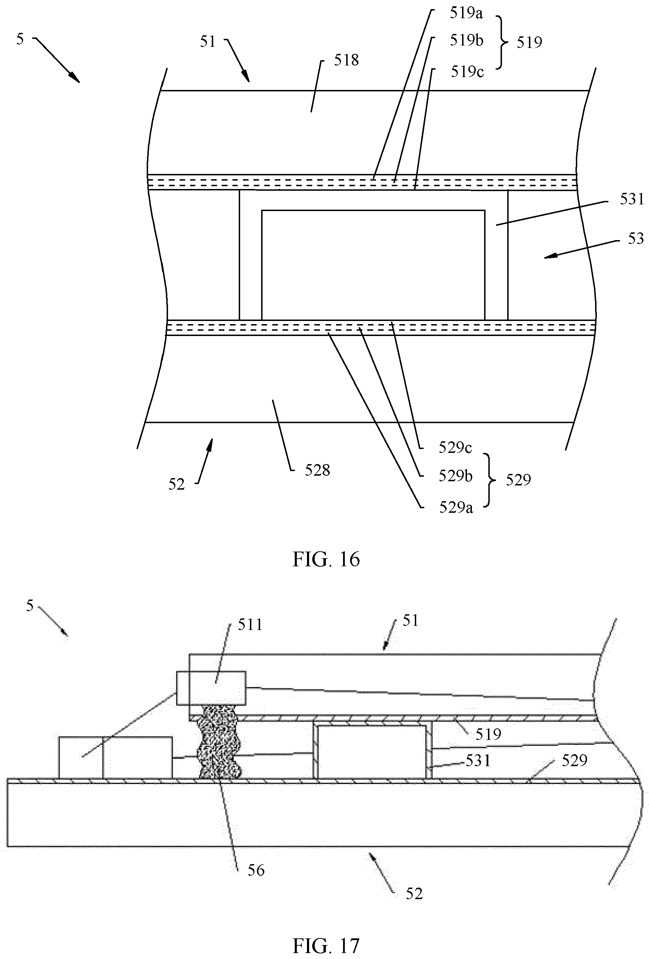

FIG. 16 is a schematic diagram of a partial structure of the upper component 51, the bearing 53, and the lower component 52 of the SMA motor 5 shown in FIG. 10 in some other embodiments.

In some embodiments, the lubrication coating 531 is lubricating oil, lubricating grease, or a solid lubricant. In this case, the lubrication coating 531 can reduce a friction force between the upper component 51 and the bearing 53, improve travel control precision of the SMA motor 5, and reduce a jitter amount of the lens assembly 3 of the camera module 10.

In some embodiments, the upper component 51 includes the upper component body 518 and the upper coating 519. The upper coating 519 is fastened to a side that is of the upper component body 518 and close to the bearing 53, and the upper coating 519 is an insulation coating. The lower component 52 includes the lower component body 528 and the lower coating 529. The lower coating 529 is fastened to a side that is of the lower component body 528 and close to the bearing 53, and the lower coating 529 is an insulation coating. The upper component 51 is insulated from the lower component 52 by using the upper coating 519 and the lower coating 529.

In some embodiments, the insulation coating includes a metal layer, a metal inorganic compound layer, and an inorganic layer that are sequentially stacked. The inorganic layer of the insulation coating is a carbon layer, and is used to implement insulation. The metal layer of the insulation coating is a titanium layer, and the metal inorganic compound layer of the insulation coating is a carbon titanium compound layer. Alternatively, the metal layer of the insulation coating is a chromium layer, and the metal inorganic compound layer of the insulation coating is a carbon chromium compound layer. In other words, the upper coating 519 includes the metal layer 519a, the metal inorganic compound layer 519b, and the inorganic layer 519c that are sequentially stacked. The lower coating 529 includes the metal layer 529a, the metal inorganic compound layer 529b, and the inorganic layer 529c that are sequentially stacked. In this embodiment, the insulation coating has a thin thickness, high flexibility, high hardness, high insulation, and high overall structural reliability.

In some other embodiments, the inorganic layer of the insulation coating may also be a silicon layer. The metal layer of the insulation coating may be a titanium layer or a chromium layer, and the metal inorganic compound layer is correspondingly a silicon titanium compound layer or a silicon chromium compound layer. In some other embodiments, the insulation coating may also be entirely plated by using an organic polymer material. A specific structure, material, and manufacturing method of the insulation coating are not strictly limited in this application.

In some other embodiments, the upper component 51 may not be provided with the upper coating 519, the lower component 52 is provided with the insulated lower coating 529, and the upper component 51 is insulated from the lower component 52 by using the lower coating 529. In some other embodiments, the upper component 51 is provided with the insulated upper coating 519, the lower component 52 may not be provided with the lower coating 529, and the upper component 51 is insulated from the lower component 52 by using the upper coating 519.

FIG. 17 is a schematic diagram of a structure of the SMA motor 5 shown in FIG. 3 in some other embodiments. FIG. 17 clearly shows a structure of the SMA motor 5, and shows partial filling of the structure of the SMA motor 5.

The SMA motor 5 in this embodiment may include all or most features of the SMA motor 5 in the foregoing embodiments. A main difference between the SMA motor 5 in this embodiment and the SMA motor 5 in the foregoing embodiments lies in that:

In some embodiments, the SMA motor 5 further includes a cushion rubber 56. The cushion rubber 56 is located between the upper component 51 and the lower component 52. One end of the cushion rubber 56 is fixedly connected to the upper component 51, and the other end is fixedly connected to the upper component 51. For example, the cushion rubber 56 may be a damping adhesive, a shock absorption adhesive, or the like.

In this embodiment, the SMA motor 5 reduces a jitter amplitude of the upper component 51 in a movement process by using the cushion rubber 56, to effectively reduce a jitter amount of the lens assembly 3 of the camera module 10, and reduce low-frequency ripple jitter when an image shooting preview interface is still.

In some embodiments, one end of the cushion rubber 56 may be fixedly connected to the movable crimp 511 of the upper component 51. Because a pulling force of the SMA wire 54 acts on the movable crimp 511, when the cushion rubber 56 is fixedly connected to the movable crimp 511, a resultant force is formed at the movable crimp 511, thereby ensuring structural reliability of the upper component 51 under a force. In some other embodiments, the cushion rubber 56 may alternatively be fastened to another position of the upper component 51.

There may be a plurality of cushion rubbers 56, and the plurality of cushion rubbers 56 are centrosymmetrically disposed. A symmetric center is an intersection line of a first reference plane and a second reference plane.

It may be understood that, in this embodiment, the SMA motor 5 is further provided with the lubrication coating 531 on the bearing 53, and both the cushion rubber 56 and the lubrication coating 531 on the bearing 53 are used to reduce jitter. The upper component 51 of the SMA motor 5 may further include the upper coating 519 (for related descriptions, refer to the foregoing embodiments), and the lower component 52 of the SMA motor 5 may further include the lower coating 529 (for related descriptions, refer to the foregoing embodiments). In some other embodiments, jitter of the SMA motor 5 may alternatively be reduced separately by using the cushion rubber 56.

It may be understood that, in some other embodiments, the SMA motor 5 may alternatively reduce jitter by using a software control method. For example, the electronic device 1000 detects an environment condition by using a photosensitive element and a gyroscope. When high illuminance and stillness are detected, and when it is detected that the electronic device 1000 is still and the camera module 10 is turned on to be in a preview state, the system automatically reduces driving power consumption (such as a voltage amplitude, or a pulse width modulation (pulse width modulation, PWM) duty cycle) of the SMA wire 54. This results in a lower degree of wire shrinkage and a lower feedback sensitivity, thereby reducing a corresponding jitter amount.

Alternatively, the electronic device 1000 detects a scenario by using a same method, and when detecting a high-illuminance scenario and a still scenario, the electronic device 1000 switches to an optimal frequency by using an algorithm. Jitter amounts vary with different drive frequencies of the pulse width modulation. Therefore, switching to the optimal frequency can reduce the jitter to some extent.

Alternatively, a slack line length of the SMA wire 54 is adjusted, and an optimal slack line length is determined by comparing jitter amounts under different slack line lengths (which are actually adjusted by using a slack resistance), to reduce jitter. It may be understood that the SMA motor 5 implements drive control by using resistance feedback of the SMA wire 54. When the SMA wire 54 is not powered on, the SMA wire 54 is in a slack state. When the SMA wire 54 is electrified and has no displacement, the SMA wire 54 is in a straightened state. A resistance difference between the slack state and the straightened state is referred to as the slack resistance (slack resistance), to represent a slack degree of the line length of the SMA wire 54 when the SMA wire 54 is not powered on. Generally, under a same drive parameter, a larger slack resistance indicates a longer line length when the SMA wire 54 is not powered on. Under a same drive control parameter, for different line lengths, shrinkage rates are different, and corresponding resistance feedback precisions are also different. Within a specific range, under a same drive control parameter, a larger slack resistance (that is, a longer slack line length) indicates a smaller jitter amount.

The foregoing descriptions are merely specific embodiments of this application, but are not intended to limit the protection scope of this application. Any variation or replacement readily figured out by a person skilled in the art within the technical scope of the appended claims shall fall within the protection scope of this application. In a case that no conflict occurs, embodiments of this application and features in embodiments may be mutually combined. Therefore, the protection scope of this application shall be subject to the protection scope of the claims.

## Claims

1. An SMA motor (5), comprising an upper component (51), a lower component (52), a plurality of bearings (53), and four SMA wires (54), wherein
the lower component (52) and the upper component (51) are stacked, the plurality of bearings (53) are located between the lower component (52) and the upper component (51), one end of each bearing (53) is fixedly connected to the lower component (52), and the other end is slidably connected to the upper component (51);
one end of each SMA wire (54) is fixedly connected to the upper component (51), the other end is fixedly connected to the lower component (52), the SMA wires (54) shrink when being electrified and heated, the four SMA wires (54) are divided into two pairs, the two pairs of SMA wires (54) are symmetrically disposed relative to a first reference plane (5a), two SMA wires (54) of a same pair are symmetrically disposed relative to a second reference plane (5b), and the second reference plane (5b) intersects with the first reference plane (5a); and
each bearing (53) comprises a lubrication coating (531), wherein the lubrication coating (531) is disposed at an end that is of the bearing (53) and close to the upper component (51) and is in contact with the upper component (51);
wherein each bearing (53) further comprises a bearing body (532), one end of the bearing body (532) is fastened to the lower component (52), and the lubrication coating (531) is fastened to the other end of the bearing body (532);
**characterized in that**
the lubrication coating (531) comprises a metal layer (531a), a metal inorganic compound layer (531b), and an inorganic layer (531c) that are sequentially stacked, wherein the metal layer (531a) of the lubrication coating (531) is fastened to the bearing body (532), the metal layer (531a) of the lubrication coating (531) and the metal inorganic compound layer (531b) of the lubrication coating (531) comprise a same element, and the metal inorganic compound layer (531b) of the lubrication coating (531) and the inorganic layer (531c) of the lubrication coating (531) comprise a same element.

2. The SMA motor (5) according to claim 1, wherein the inorganic layer (531c) of the lubrication coating (531) is a carbon layer, and a structure of a surface layer that is of the inorganic layer (531c) of the lubrication coating (531) and faces away from the metal inorganic compound layer (531b) of the lubrication coating (531) is a diamond-like structure.

3. The SMA motor (5) according to claim 2, wherein the metal layer (531a) of the lubrication coating (531) is a chromium layer, and the metal inorganic compound layer (531b) of the lubrication coating (531) is a carbon chromium compound layer.

4. The SMA motor (5) according to any one of claims 1 to 3, wherein the upper component (51) comprises an upper component body (518) and an upper coating (519), and the upper coating (519) is fastened to a side that is of the upper component body (518) and close to the bearing (53); and
the upper coating (519) comprises a metal layer (531a), a metal inorganic compound layer (531b), and an inorganic layer (531c) that are sequentially stacked, wherein the metal layer (531a) of the upper coating (519) is fastened to the upper component body (518), the metal layer (531a) of the upper coating (519) and the metal inorganic compound layer (531b) of the upper coating (519) comprise a same element, and the metal inorganic compound layer (531b) of the upper coating (519) and the inorganic layer (531c) of the upper coating (519) comprise a same element.

5. The SMA motor (5) according to claim 4, wherein the inorganic layer (531c) of the upper coating (519) is a carbon layer, and a structure of a surface layer that is of the inorganic layer (531c) of the upper coating (519) and faces away from the metal inorganic compound layer (531b) of the upper coating (519) is a diamond-like structure.

6. The SMA motor (5) according to claim 5, wherein the metal layer (531a) of the upper coating (519) is a chromium layer, and the metal inorganic compound layer (531b) of the upper coating (519) is a carbon chromium compound layer.

7. The SMA motor (5) according to any one of claims 1 to 6, wherein the lower component (52) comprises a lower component body (528) and a lower coating (529), the lower coating (529) is fastened to a side that is of the lower component body (528) and close to the bearing (53), and the lower coating (529) is an insulation coating.

8. The SMA motor (5) according to claim 7, wherein the lower coating (529) comprises a metal layer (531a), a metal inorganic compound layer (531b), and an inorganic layer (531c) that are sequentially stacked, and the metal layer (531a) of the lower coating (529) is fastened to the lower component body (528);
the inorganic layer (531c) of the lower coating (529) is a carbon layer; and
the metal layer (531a) of the lower coating (529) is a chromium layer, and the metal inorganic compound layer (531b) of the lower coating (529) is a carbon chromium compound layer; or the metal layer (531a) of the lower coating (529) is a titanium layer, and the metal inorganic compound layer (531b) of the lower coating (529) is a carbon titanium compound layer.

9. The SMA motor (5) according to claim 1, wherein the lubrication coating (531) is lubricating oil, lubricating grease, or a solid lubricant.

10. The SMA motor (5) according to claim 9, wherein the upper component (51) comprises an upper component body (518) and an upper coating (519), the upper coating (519) is fastened to a side that is of the upper component body (518) and close to the bearing (53), and the upper coating (519) is an insulation coating; and/or
the lower component (52) comprises a lower component body (528) and a lower coating (529), the lower coating (529) is fastened to a side that is of the lower component body (528) and close to the bearing (53), and the lower coating (529) is an insulation coating.

11. The SMA motor (5) according to claim 10, wherein the insulation coating comprises a metal layer (531a), a metal inorganic compound layer (531b), and an inorganic layer (531c) that are sequentially stacked;
the inorganic layer (531c) of the insulation coating is a carbon layer; and
the metal layer (531a) of the insulation coating is a titanium layer, and the metal inorganic compound layer (531b) of the insulation coating is a carbon titanium compound layer; or the metal layer (531a) of the insulation coating is a chromium layer, and the metal inorganic compound layer (531b) of the insulation coating is a carbon chromium compound layer.

12. The SMA motor (5) according to any one of claims 1 to 11, wherein the SMA motor (5) further comprises a cushion rubber (56), wherein the cushion rubber (56) is located between the upper component (51) and the lower component (52), one end of the cushion rubber (56) is fixedly connected to the upper component (51), and the other end is fixedly connected to the lower component (52).

13. The SMA motor (5) according to any one of claims 1 to 12, wherein the SMA motor (5) further comprises two spring arms (55) that are L-shaped, each of the spring arms (55) comprises a fixed end (551) and a movable end (552), the movable end (552)s of the spring arms (55) are fastened to the upper component (51), the fixed end (551)s of the spring arms (55) are fastened to the lower component (52), the two spring arms (55) are centrosymmetrically disposed, and a symmetric center is an intersection line of the first reference plane (5a) and the second reference plane (5b).

14. The SMA motor (5) according to any one of claims 1 to 12, wherein the SMA motor (5) further comprises four spring arms (55), each of the spring arms (55) comprises a fixed end (551) and a movable end (552), the movable end (552)s of the spring arms (55) are fastened to the upper component (51), the fixed end (551)s of the spring arms (55) are fastened to the lower component (52), the four spring arms (55) are divided into two pairs, the two pairs of spring arms (55) are symmetrically disposed relative to the first reference plane (5a), and two spring arms (55) of a same pair are symmetrically disposed relative to the second reference plane (5b).

15. The SMA motor (5) according to claim 13 or 14, wherein the spring arm further comprises a bending part (553), the bending part (553) is located between the fixed end (551) and the movable end (552), and the bending part (553) protrudes in a direction away from the lower component (52) of the motor.

16. A camera module (10), comprising a module support (1), a lens assembly (3) mounted inside the module support (1), an image sensor (6), and the SMA motor (5) according to any one of claims 1 to 15, wherein a lower component (52) of the SMA motor (5) is fixedly connected to the module support (1), the lens assembly (3) is mounted on an upper component (51) of the SMA motor (5), the SMA motor (5) comprises a transparent area (50), a lens (32) of the lens assembly (3) directly faces the transparent area (50), the image sensor (6) is located on a side that is of the SMA motor (5) and that faces away from the lens assembly (3), and the image sensor (6) is configured to receive light passing through the lens assembly (3) and the transparent area (50).

17. An electronic device, comprising a housing (100), a processor (600), and the camera module (10) according to claim 16, wherein the processor (600) and the camera module (10) are accommodated in the housing (100), and the camera module (10) is electrically connected to the processor (600).

## Patentansprüche

1. SMA-Motor (5), der eine obere Komponente (51), eine untere Komponente (52), eine Vielzahl von Lagern (53) und vier SMA-Drähte (54) umfasst, wobei
die untere Komponente (52) und die obere Komponente (51) gestapelt sind, sich die Vielzahl von Lagern (53) zwischen der unteren Komponente (52) und der oberen Komponente (51) befindet, ein Ende jedes Lagers (53) fest mit der unteren Komponente (52) verbunden ist und das andere Ende verschiebbar mit der oberen Komponente (51) verbunden ist;
ein Ende jedes SMA-Drahts (54) fest mit der oberen Komponente (51) verbunden ist, das andere Ende fest mit der unteren Komponente (52) verbunden ist, die SMA-Drähte (54) schrumpfen, wenn sie elektrifiziert und erwärmt werden, die vier SMA-Drähte (54) in zwei Paare aufgeteilt sind, die zwei Paare von SMA-Drähten (54) symmetrisch zu einer ersten Referenzebene (5a) angeordnet sind, zwei SMA-Drähte (54) eines gleichen Paares symmetrisch zu einer zweiten Referenzebene (5b) angeordnet sind und die zweite Referenzebene (5b) die erste Referenzebene (5a) schneidet; und
jedes Lager (53) eine Schmierbeschichtung (531) umfasst, wobei die Schmierbeschichtung (531) an einem Ende des Lagers (53) und nahe der oberen Komponente (51) angeordnet ist und mit der oberen Komponente (51) in Kontakt steht;
wobei jedes Lager (53) ferner einen Lagerkörper (532) umfasst, ein Ende des Lagerkörpers (532) an der unteren Komponente (52) befestigt ist und die Schmierbeschichtung (531) an dem anderen Ende des Lagerkörpers (532) befestigt ist;
**dadurch gekennzeichnet, dass**
die Schmierbeschichtung (531) eine Metallschicht (531a), eine anorganische Metallverbindungsschicht (531b) und eine anorganische Schicht (531c) umfasst, die nacheinander gestapelt sind, wobei die Metallschicht (531a) der Schmierbeschichtung (531) an dem Lagerkörper (532) befestigt ist, die Metallschicht (531a) der Schmierbeschichtung (531) und die anorganische Metallverbindungsschicht (531b) der Schmierbeschichtung (531) ein gleiches Element umfassen und die anorganische Metallverbindungsschicht (531b) der Schmierbeschichtung (531) und die anorganische Schicht (531c) der Schmierbeschichtung (531) ein gleiches Element umfassen.

2. SMA-Motor (5) nach Anspruch 1, wobei die anorganische Schicht (531c) der Schmierbeschichtung (531) eine Kohlenstoffschicht ist und eine Struktur einer Oberflächenschicht der anorganischen Schicht (531c) der Schmierbeschichtung (531), die von der anorganischen Metallverbindungsschicht (531b) der Schmierbeschichtung (531) abgewandt ist, eine diamantartige Struktur ist.

3. SMA-Motor (5) nach Anspruch 2, wobei die Metallschicht (531a) der Schmierbeschichtung (531) eine Chromschicht ist und die anorganische Metallverbindungsschicht (531b) der Schmierbeschichtung (531) eine Kohlenstoff-Chrom-Verbindungsschicht ist.

4. SMA-Motor (5) nach einem der Ansprüche 1 bis 3, wobei die obere Komponente (51) einen oberen Komponentenkörper (518) und eine obere Beschichtung (519) umfasst und die obere Beschichtung (519) an einer Seite des oberen Komponentenkörpers (518) und in der Nähe des Lagers (53) befestigt ist; und
die obere Beschichtung (519) eine Metallschicht (531a), eine anorganische Metallverbindungsschicht (531b) und eine anorganische Schicht (531c) umfasst, die nacheinander gestapelt sind, wobei die Metallschicht (531a) der oberen Beschichtung (519) an dem oberen Komponentenkörper (518) befestigt ist, die Metallschicht (531a) der oberen Beschichtung (519) und die anorganische Metallverbindungsschicht (531b) der oberen Beschichtung (519) ein gleiches Element umfassen und die anorganische Metallverbindungsschicht (531b) der oberen Beschichtung (519) und die anorganische Schicht (531c) der oberen Beschichtung (519) ein gleiches Element umfassen.

5. SMA-Motor (5) nach Anspruch 4, wobei die anorganische Schicht (531c) der oberen Beschichtung (519) eine Kohlenstoffschicht ist und eine Struktur einer Oberflächenschicht der anorganischen Schicht (531c) der oberen Beschichtung (519), die von der anorganischen Metallverbindungsschicht (531b) der oberen Beschichtung (519) abgewandt ist, eine diamantartige Struktur ist.

6. SMA-Motor (5) nach Anspruch 5, wobei die Metallschicht (531a) der oberen Beschichtung (519) eine Chromschicht ist und die anorganische Metallverbindungsschicht (531b) der oberen Beschichtung (519) eine Kohlenstoff-Chrom-Verbindungsschicht ist.

7. SMA-Motor (5) nach einem der Ansprüche 1 bis 6, wobei die untere Komponente (52) einen unteren Komponentenkörper (528) und eine untere Beschichtung (529) umfasst, die untere Beschichtung (529) an einer Seite des unteren Komponentenkörpers (528) und in der Nähe des Lagers (53) befestigt ist und die untere Beschichtung ( 529 ) eine Isolierbeschichtung ist.

8. SMA-Motor (5) nach Anspruch 7, wobei die untere Beschichtung (529) eine Metallschicht (531a), eine anorganische Metallverbindungsschicht (531b) und eine anorganische Schicht (531c) umfasst, die nacheinander gestapelt sind, und die Metallschicht (531a) der unteren Beschichtung (529) an dem unteren Komponentenkörper (528) befestigt ist;
die anorganische Schicht (531c) der unteren Beschichtung (529) eine Kohlenstoffschicht ist; und
die Metallschicht (531a) der unteren Beschichtung (529) eine Chromschicht ist und die anorganische Metallverbindungsschicht (531b) der unteren Beschichtung (529) eine Kohlenstoff-Chrom-Verbindungsschicht ist; oder die Metallschicht (531a) der unteren Beschichtung (529) eine Titanschicht ist und die anorganische Metallverbindungsschicht (531b) der unteren Beschichtung (529) eine Kohlenstoff-Titan-Verbindungsschicht ist.

9. SMA-Motor (5) nach Anspruch 1, wobei die Schmierbeschichtung (531) Schmieröl, Schmierfett oder ein festes Schmiermittel ist.

10. SMA-Motor (5) nach Anspruch 9, wobei die obere Komponente (51) einen oberen Komponentenkörper (518) und eine obere Beschichtung (519) umfasst, die obere Beschichtung (519) an einer Seite des oberen Komponentenkörpers (518) und in der Nähe des Lagers (53) befestigt ist und die obere Beschichtung (519) eine Isolierbeschichtung ist; und/oder
die untere Komponente (52) einen unteren Komponentenkörper (528) und eine untere Beschichtung (529) umfasst, die untere Beschichtung (529) an einer Seite des unteren Komponentenkörpers (528) und in der Nähe des Lagers (53) befestigt ist und die untere Beschichtung (529) eine Isolierbeschichtung ist.

11. SMA-Motor (5) nach Anspruch 10, wobei die Isolierbeschichtung eine Metallschicht (531a), eine anorganische Metallverbindungsschicht (531b) und eine anorganische Schicht (531c) umfasst, die nacheinander gestapelt sind;
die anorganische Schicht (531c) der Isolierbeschichtung eine Kohlenstoffschicht ist; und
die Metallschicht (531a) der Isolierbeschichtung eine Titanschicht ist und die anorganische Metallverbindungsschicht (531b) der Isolierbeschichtung eine Kohlenstoff-Titan-Verbindungsschicht ist; oder die Metallschicht (531a) der Isolierbeschichtung eine Chromschicht ist und die anorganische Metallverbindungsschicht (531b) der Isolierbeschichtung eine Kohlenstoff-Chrom-Verbindungsschicht ist.

12. SMA-Motor (5) nach einem der Ansprüche 1 bis 11, wobei der SMA-Motor (5) ferner eine Pufferschicht (56) umfasst, wobei sich die Pufferschicht (56) zwischen der oberen Komponente (51) und der unteren Komponente (52) befindet, ein Ende der Pufferschicht (56) fest mit der oberen Komponente (51) verbunden ist und das andere Ende fest mit der unteren Komponente (52) verbunden ist.

13. SMA-Motor (5) nach einem der Ansprüche 1 bis 12, wobei der SMA-Motor (5) ferner zwei Federarme (55), die L-förmig sind, umfasst, jeder der Federarme (55) ein festes Ende (551) und ein bewegbares Ende (552) umfasst, die bewegbaren Enden (552) der Federarme (55) an der oberen Komponente (51) befestigt sind, die festen Enden (551) der Federarme (55) an der unteren Komponente (52) befestigt sind, die zwei Federarme (55) zentrosymmetrisch angeordnet sind und ein Symmetriezentrum eine Schnittlinie der ersten Referenzebene (5a) und der zweiten Referenzebene (5b) ist.

14. SMA-Motor (5) nach einem der Ansprüche 1 bis 12, wobei der SMA-Motor (5) ferner vier Federarme (55) umfasst, jeder der Federarme (55) ein festes Ende (551) und ein bewegbares Ende (552) umfasst, die bewegbaren Enden (552) der Federarme (55) an der oberen Komponente (51) befestigt sind, die festen Enden (551) der Federarme (55) an der unteren Komponente (52) befestigt sind, die vier Federarme (55) in zwei Paare aufgeteilt sind, die zwei Paare von Federarmen (55) symmetrisch zu der ersten Referenzebene (5a) angeordnet sind und zwei Federarme (55) eines gleichen Paares symmetrisch zu der zweiten Referenzebene (5b) angeordnet sind.

15. SMA-Motor (5) nach Anspruch 13 oder 14, wobei der Federarm ferner einen Biegeteil (553) umfasst, sich der Biegeteil (553) zwischen dem festen Ende (551) und dem bewegbaren Ende (552) befindet und der Biegeteil (553) in eine Richtung weg von der unteren Komponente (52) des Motors vorsteht.

16. Kameramodul (10), das einen Modulträger (1), eine Linsenanordnung (3), die in dem Modulträger (1) montiert ist, einen Bildsensor (6) und den SMA-Motor (5) nach einem der Ansprüche 1 bis 15 umfasst,
wobei eine untere Komponente (52) des SMA-Motors (5) fest mit dem Modulträger (1) verbunden ist, die Linsenanordnung (3) auf einer oberen Komponente (51) des SMA-Motors (5) montiert ist, der SMA-Motor (5) einen transparenten Bereich (50) umfasst, eine Linse (32) der Linsenanordnung (3) dem transparenten Bereich (50) direkt zugewandt ist, sich der Bildsensor (6) an einer Seite des SMA-Motors (5) befindet, die von der Linsenanordnung (3) abgewandt ist, und der Bildsensor (6) dazu konfiguriert ist, Licht, das durch die Linsenanordnung (3) und den transparenten Bereich (50) hindurchtritt, zu empfangen.

17. Elektronische Vorrichtung, die ein Gehäuse (100), einen Prozessor (600) und das Kameramodul (10) nach Anspruch 16 umfasst,
wobei der Prozessor (600) und das Kameramodul (10) in dem Gehäuse (100) untergebracht sind und das Kameramodul (10) elektrisch mit dem Prozessor (600) verbunden ist.

## Revendications

1. Moteur SMA (5), comprenant un composant supérieur (51), un composant inférieur (52), une pluralité de paliers (53) et quatre fils SMA (54), dans lequel
le composant inférieur (52) et le composant supérieur (51) sont empilés, la pluralité de paliers (53) sont situés entre le composant inférieur (52) et le composant supérieur (51), une extrémité de chaque palier (53) est reliée de manière fixe au composant inférieur (52), et l'autre extrémité est reliée de manière coulissante au composant supérieur (51) ;
une extrémité de chaque fil SMA (54) est connectée de manière fixe au composant supérieur (51), l'autre extrémité est connectée de manière fixe au composant inférieur (52), les fils SMA (54) rétrécissent lorsqu'ils sont électrifiés et chauffés, les quatre fils SMA (54) sont divisés en deux paires, les deux paires de fils SMA (54) sont disposées symétriquement par rapport à un premier plan de référence (5a), deux fils SMA (54) d'une même paire sont disposés symétriquement par rapport à un second plan de référence (5b), et le second plan de référence (5b) coupe le premier plan de référence (5a) ; et
chaque palier (53) comprend un revêtement de lubrification (531), dans lequel le revêtement de lubrification (531) est disposé à une extrémité du palier (53) et à proximité du composant supérieur (51) et est en contact avec le composant supérieur (51) ;
dans lequel chaque palier (53) comprend également un corps de palier (532), une extrémité du corps de palier (532) est fixée au composant inférieur (52), et le revêtement de lubrification (531) est fixé à l'autre extrémité du corps de palier (532) ;
**caractérisé en ce que**
le revêtement de lubrification (531) comprend une couche métallique (531a), une couche de composé inorganique métallique (531b) et une couche inorganique (531c) qui sont empilées séquentiellement, dans lequel la couche métallique (531a) du revêtement de lubrification (531) est fixée au corps de palier (532), la couche métallique (531a) du revêtement de lubrification (531) et la couche de composé inorganique métallique (531b) du revêtement de lubrification (531) comprend un même élément, et la couche de composé inorganique métallique (531b) du revêtement de lubrification (531) et la couche inorganique (531c) du revêtement de lubrification (531) comprend un même élément.

2. Moteur SMA (5) selon la revendication 1, dans lequel la couche inorganique (531c) du revêtement de lubrification (531) est une couche de carbone, et une structure d'une couche de surface de la couche inorganique (531c) du revêtement de lubrification (531) et qui est tournée à l'opposé de la couche de composé inorganique métallique (531b) du revêtement de lubrification (531) est une structure de type diamant.

3. Moteur SMA (5) selon la revendication 2, dans lequel la couche métallique (531a) du revêtement de lubrification (531) est une couche de chrome, et la couche de composé inorganique métallique (531b) du revêtement de lubrification (531) est une couche de composé de chrome-carbone.

4. Moteur SMA (5) selon l'une quelconque des revendications 1 à 3, dans lequel le composant supérieur (51) comprend un corps de composant supérieur (518) et un revêtement supérieur (519), et le revêtement supérieur (519) est fixé sur un côté du corps du composant supérieur (518) et à proximité du palier (53) ; et le revêtement supérieur (519) comprend une couche métallique (531a), une couche de composé inorganique métallique (531b) et une couche inorganique (531c) qui sont empilées séquentiellement, dans lequel la couche métallique (531a) du revêtement supérieur (519) est fixée au corps de composant supérieur (518), la couche métallique (531a) du revêtement supérieur (519) et la couche de composé inorganique métallique (531b) du revêtement supérieur (519) comprend un même élément, et la couche de composé inorganique métallique (531b) du revêtement supérieur (519) et la couche inorganique (531c) du revêtement supérieur (519) comprend un même élément.

5. Moteur SMA (5) selon la revendication 4, dans lequel la couche inorganique (531c) du revêtement supérieur (519) est une couche de carbone, et une structure d'une couche de surface de la couche inorganique (531c) du revêtement supérieur (519) et qui est tournée à l'opposé de la couche de composé inorganique métallique (531b) du revêtement supérieur (519) est une structure de type diamant.

6. Moteur SMA (5) selon la revendication 5, dans lequel la couche métallique (531a) du revêtement supérieur (519) est une couche de chrome, et la couche de composé inorganique métallique (531b) du revêtement supérieur (519) est une couche de composé de chrome-carbone.

7. Moteur SMA (5) selon l'une quelconque des revendications 1 à 6, dans lequel le composant inférieur (52) comprend un corps de composant inférieur (528) et un revêtement inférieur (529), le revêtement inférieur (529) est fixé sur un côté du corps de composant inférieur (528) et à proximité du palier (53), et le revêtement inférieur (529) est un revêtement isolant.

8. Moteur SMA (5) selon la revendication 7, dans lequel le revêtement inférieur (529) comprend une couche métallique (531a), une couche de composé inorganique métallique (531b) et une couche inorganique (531c) qui sont empilées séquentiellement, et la couche métallique (531a) du revêtement inférieur (529) est fixée au corps du composant inférieur (528) ;
la couche inorganique (531c) du revêtement inférieur (529) est une couche de carbone ; et
la couche métallique (531a) du revêtement inférieur (529) est une couche de chrome, et la couche de composé inorganique métallique (531b) du revêtement inférieur (529) est une couche de composé de carbone-chrome ; ou la couche métallique (531a) du revêtement inférieur (529) est une couche de titane, et la couche de composé inorganique métallique (531b) du revêtement inférieur (529) est une couche de composé de carbone-titane.

9. Moteur SMA (5) selon la revendication 1, dans lequel le revêtement de lubrification (531) est une huile lubrifiante, une graisse lubrifiante ou un lubrifiant solide.

10. Moteur SMA (5) selon la revendication 9, dans lequel le composant supérieur (51) comprend un corps de composant supérieur (518) et un revêtement supérieur (519), et le revêtement supérieur (519) est fixé sur un côté du corps du composant supérieur (518) et à proximité du palier (53), et le revêtement supérieur (519) est un revêtement isolant ; et/ou
le composant inférieur (52) comprend un corps de composant inférieur (528) et un revêtement inférieur (529), le revêtement inférieur (529) est fixé sur un côté du corps de composant inférieur (528) et à proximité du palier (53), et le revêtement inférieur (529) est un revêtement isolant.

11. Moteur SMA (5) selon la revendication 10, dans lequel le revêtement isolant comprend une couche métallique (531a), une couche de composé inorganique métallique (531b) et une couche inorganique (531c) qui sont empilées séquentiellement ;
la couche inorganique (531c) du revêtement isolant est une couche de carbone ; et
la couche métallique (531a) du revêtement isolant est une couche de titane, et la couche de composé inorganique métallique (531b) du revêtement isolant est une couche de composé de carbone-titane ; ou la couche métallique (531a) du revêtement isolant est une couche chrome, et la couche de composé inorganique métallique (531b) du revêtement isolant est une couche de composé de chrome-carbone.

12. Moteur SMA (5) selon l'une quelconque des revendications 1 à 11, dans lequel le moteur SMA (5) comprend également un caoutchouc amortisseur (56), dans lequel le caoutchouc amortisseur (56) est situé entre le composant supérieur (51) et le composant inférieur (52), une extrémité du caoutchouc amortisseur (56) est reliée de manière fixe au composant supérieur (51), et l'autre extrémité est reliée de manière fixe au composant inférieur (52).

13. Moteur SMA (5) selon l'une quelconque des revendications 1 à 12, dans lequel le moteur SMA (5) comprend également deux bras à ressort (55) qui sont en forme de L, chacun des bras à ressort (55) comprend une extrémité fixe (551) et une extrémité mobile (552), les extrémités mobiles (552) des bras à ressort (55) sont fixées au composant supérieur (51), les extrémités fixes (551) des bras à ressort (55) sont fixées au composant inférieur (52), les deux bras à ressort (55) sont disposés de manière centrosymétrique, et un centre symétrique est une ligne d'intersection du premier plan de référence (5a) et du second plan de référence (5b).

14. Moteur SMA (5) selon l'une quelconque des revendications 1 à 12, dans lequel le moteur SMA (5) comprend également quatre bras à ressort (55), chacun des bras à ressort (55) comprend une extrémité fixe (551) et une extrémité mobile (552), les extrémités mobiles (552) des bras à ressort (55) sont fixées au composant supérieur (51), les extrémités fixes (551) des bras à ressort (55) sont fixées au composant inférieur (52), les quatre bras à ressort (55) sont divisés en deux paires, les deux paires de bras à ressort (55) sont disposées symétriquement par rapport au premier plan de référence (5a), et deux bras à ressort (55) d'une même paire sont disposés symétriquement par rapport au second plan de référence (5b).

15. Moteur SMA (5) selon la revendication 13 ou 14, dans lequel le bras à ressort comprend également une partie de courbure (553), la partie de courbure (553) est située entre l'extrémité fixe (551) et l'extrémité mobile (552), et la partie de courbure (553) fait saillie dans une direction éloignée du composant inférieur (52) du moteur.

16. Module de caméra (10), comprenant un support de module (1), un ensemble d'objectifs (3) monté à l'intérieur du support de module (1), un capteur d'image (6) et le moteur SMA (5) selon l'une quelconque des revendications 1 à 15,
dans lequel un composant inférieur (52) du moteur SMA (5) est relié de manière fixe au support de module (1), l'ensemble d'objectifs (3) est monté sur un composant supérieur (51) du moteur SMA (5), le moteur SMA (5) comprend une zone transparente (50), un objectif (32) de l'ensemble des objectifs (3) fait directement face à la zone transparente (50), le capteur d'image (6) est situé sur un côté du moteur SMA (5) et qui est tourné à l'opposé de l'ensemble des objectifs (3), et le capteur d'image (6) est configuré pour recevoir la lumière passant à travers l'ensemble d'objectifs (3) et la zone transparente (50).

17. Dispositif électronique, comprenant un boîtier (100), un processeur (600) et le module de caméra (10) selon la revendication 16,
dans lequel le processeur (600) et le module de caméra (10) sont logés dans le boîtier (100), et le module de caméra (10) est connecté électriquement au processeur (600).
